# EUROPEAN PATENT SPECIFICATION

(11) **EP 2 757 415 B1**
(45) Date of publication and mention of the grant of the patent: **20.12.2017**
(21) Application number: 12832353.2
(22) Date of filing: 04.09.2012
(51) Int. Cl.: G03B 35/08, G02B 7/28, G03B 17/14, H04N 5/225, H04N 13/02, G03B 7/095, G03B 13/36, H04N 13/00, G03B 35/10

(54) **3D IMAGING DEVICE**
3D-ABBILDUNGSVORRICHTUNG
DISPOSITIF D'IMAGERIE TRIDIMENSIONNELLE (3D)

(30) Priority: 13.09.2011 JP 2011199710
(43) Date of publication of application: 23.07.2014
(73) Proprietor: Fujifilm Corporation, Minato-ku Tokyo 106-8620 (JP)
(72) Inventor: HAYASHI Junji, Saitama-shi Saitama 331-9624 (JP); SATODATE Yoshihiro, Saitama-shi Saitama 331-9624 (JP)
(74) Representative: Hoffmann Eitle
(86) International application number: PCT/JP2012/072437
(87) International publication number: WO 2013/038950

(56) References cited:
- JP-A- H06 202 006
- JP-A- 2001 061 165
- JP-A- 2007 279 512
- JP-A- 2007 279 512
- JP-A- 2010 081 580
- JP-A- 2011 197 278
- JP-A- 2011 197 278
- US-A1- 2010 231 691
- US-A1- 2011 122 233
- "Angle of View", , 4 June 2011 (2011-06-04), XP055032733, Retrieved from the Internet: URL:http://en.wikipedia.org/w/index.php?ti tle=Angle_of_view&oldid=432485494 [retrieved on 2012-07-13]

## Description

### BACKGROUND OF THE INVENTION

### 1. Field of the Invention

The present invention relates to a stereoscopic imaging device, and more particularly to, a technology of acquiring a stereoscopic image formed from a parallax image by forming subject images, which pass through regions having imaging optical systems different from each other, on an imaging device.

### 2. Description of the Related Art

JP-A 2009-168995 describes a distance measuring device in which two polarization elements having polarization axes perpendicular to each other are disposed at a pupil position of a single-lens optical system, luminous fluxes which pass through the polarization elements are respectively separated by a polarization beam splitter, and are allowed to be incident to two imaging devices to image two images, and comparison is made with respect to an image phase difference between the two images to calculate a defocusing amount in the same manner as a phase difference AF.

JP 2011 197278 A describes a stereoscopic imaging apparatus. A single-lens stereoscopic imaging apparatus acquires main and sub images having phase difference from each other by photoelectrically converting subject images passed through different areas in a predetermined direction of a single photographic optical system by a phase difference CCD by which the subject images passed through the respective areas are subjected to pupil-division and formed respectively.

In addition, JP-A 2009-168995 describes that stereoscopic imaging becomes possible by imaging two images. Particularly, JP-A 2009-168995 describes that adjustment of a stereoscopic effect of a stereoscopic image imaged by a single-lens optical system can be carried out by changing an F-stop of a pupil mask (Paragraph [0047] of JP-A 2009-168995).

Further, JP-A 2009-168995 describes three kinds of pupil masks which are selected by the F-stop of the optical system, and each of the pupil masks has a pair of openings in which distances from an optical axis of the optical system are different from each other. In addition, in a case where the F-stop is small (bright), a pupil mask having a pupil region which is the farthest from the optical axis is used to retain distance measuring accuracy. As the F-stop increases (dark), a luminous flux from the periphery is limited, and thus a pupil mask in which the pair of openings is close to the optical axis of the optical system is selected. In addition, the pupil mask is selected in accordance with the open F-stop, and in a case where the F-stop is changed by a focal length, the pupil mask is changed in accordance with the focal length, thereby realizing optimal focus detection at all times.

JP-A 2008-242182 describes a focus detection device that carries out focus detection of a pupil-division-type phase difference detection system. A maximum image-plane defocusing amount of an interchangeable lens is proportional to a focal length, and thus in a case where the focal length is equal to or more than a predetermined value, the focus detection device carries out focus detection by setting an aperture to an F-stop that is darker than the open F-stop. In a case where the focal length is equal to or less than the predetermined value, the aperture is set to an F-stop that is darker than the open F-stop to prohibit the carrying-out of the focus detection, or the aperture is set to an F-stop darker than the open F-stop, and the F-stop of a case of carrying out the focus detection is adjusted in accordance to the focal length (Paragraph [0053] of JP-A 2008-242182).

In a case of the stereoscopic imaging device including a single-lens imaging optical system, a parallax amount of a parallax image which passes through regions in which imaging optical systems are different from each other varies according to a combination of the F-stop of the aperture and the focal length. When the parallax amount is equal to or less than 1/the number of recording horizontal pixels or 1/(the number of horizontal pixels of a stereoscopic display device), a parallax image does not have parallax, and thus stereoscopic vision is impossible. Therefore, when making a bad choice for the F-stop and the focal length in an imaging state, it is impossible to carry out stereoscopic imaging. In addition, in a case of a lens interchangeable type, when making a bad choice for an interchangeable lens, a failure of the stereoscopic imaging is recognized after imaging.

JP-A 2009-168995 describes that the adjustment of the stereoscopic effect is carried out by changing the F-stop of the pupil mask, but does not describe specific adjustment of the stereoscopic effect. In addition, in JP-A 2009-168995, an appropriate pupil mask is selected from three kinds of pupil masks. However, the selection of the pupil mask is carried out to realize optimal focus detection instead of adjusting the stereoscopic effect.

In the invention described in JP-A 2008-242182, the F-stop of the aperture is adjusted to carry out appropriate focus detection. However, JP-A 2008-242182 does not carry out imaging of the stereoscopic image.

### SUMMARY OF THE INVENTION

The invention has been made in consideration of the above-described circumstances, and an object thereof is to provide a stereoscopic imaging device capable of preventing failure of the stereoscopic imaging using a single-lens stereoscopic imaging device from occurring.

To accomplish the object, according to an aspect of the invention, there is provided a stereoscopic imaging device including the features of claim 1. Preferred aspects of the present invention are set forth in the dependent claims.

### Advantages Effects of Invention

According to the invention, in the single-lens stereoscopic imaging device, at least one of the F-stop of the aperture and the focal length of the imaging optical system is controlled on the basis of the F-stop of the aperture, the focal length of the imaging optical system, and the parallax-related information, or it is determined whether or not a combination of the F-stop of the aperture and the focal length in the imaging optical system is appropriate for the stereoscopic imaging, and notification of the determination result is made. Accordingly, it is possible to prevent failure of the stereoscopic imaging from occurring.

### BRIEF DESCRIPTION OF THE DRAWINGS

FIG. 1 is a perspective view illustrating an embodiment of a stereoscopic imaging device according to the invention.
FIG. 2 is a rear elevation view of the stereoscopic imaging device.
FIG. 3 is a view illustrating a configuration example of an imaging device of the stereoscopic imaging device.
FIGS. 4A to 4C are enlarged views illustrating main portions of the imaging device.
FIG. 5 is a block diagram illustrating an embodiment of an internal configuration of the stereoscopic imaging device shown in FIG. 1.
FIG. 6 is a graph illustrating an example of information indicating a relationship between a combination of focal length-F-stop and parallax.
FIGS. 7A to 7C show a flowchart illustrating a first embodiment of a stereoscopic imaging operation of the stereoscopic imaging device according to the invention.
FIG 8 is a view illustrating an example of a plurality of parallax priority program diagrams.
FIG 9 is a graph illustrating an example of information indicating a relationship between a combination of focal length-F-stop and parallax.
FIG. 10 is a graph illustrating parallax-related information which corresponds to a plurality of parallax amounts.
FIG 11 is a graph illustrating parallax-related information which corresponds to horizontal resolution of full-HD and HD.
FIG. 12 is a graph illustrating parallax-related information which corresponds to parallax intensity and horizontal resolution of full-HD
FIGS. 13A to 13C show a flowchart illustrating a second embodiment of the stereoscopic imaging operation of the stereoscopic imaging device according to the invention.
FIG. 14 is a view illustrating graphs of parallax-related information which corresponds to horizontal resolution of a stereoscopic liquid crystal monitor and full-HD, and regions divided by the graphs.
FIG. 15 is a perspective view illustrating another embodiment of the stereoscopic imaging device according to the invention.
FIG. 16 is a block diagram illustrating an embodiment of an internal configuration of the stereoscopic imaging device shown in FIG. 15.
FIG. 17 is a graph illustrating information which indicates a relationship between a combination of focal length-F-stop and parallax, and lens information of three kinds of representative interchangeable lenses (1), (2), and (3) in a superimposed manner.
FIGS. 18A to 18D show a flowchart illustrating a third embodiment of the stereoscopic imaging operation of the stereoscopic imaging device according to the invention.
FIG. 19 is a flowchart illustrating main portions of a fourth embodiment of the stereoscopic imaging device according to the invention.
FIGS. 20A to 20D show a flowchart illustrating a fifth embodiment of the stereoscopic imaging operation of the stereoscopic imaging device according to the invention.
FIG. 21 is a view illustrating another configuration example of the imaging device.
FIG. 22 is a view illustrating a mechanism of imaging a stereoscopic image with the imaging device.

### DESCRIPTION OF THE PREFERRED EMBODIMENTS

Hereinafter, embodiments of the stereoscopic imaging device according to the invention will be described with reference to the attached drawings.

### <First Embodiment>

### [Overall Configuration of Stereoscopic Imaging Device]

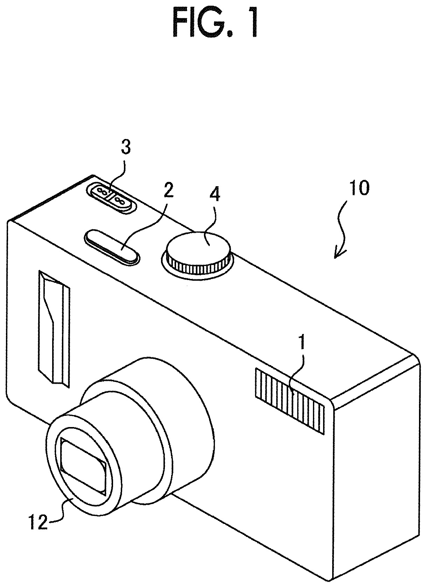

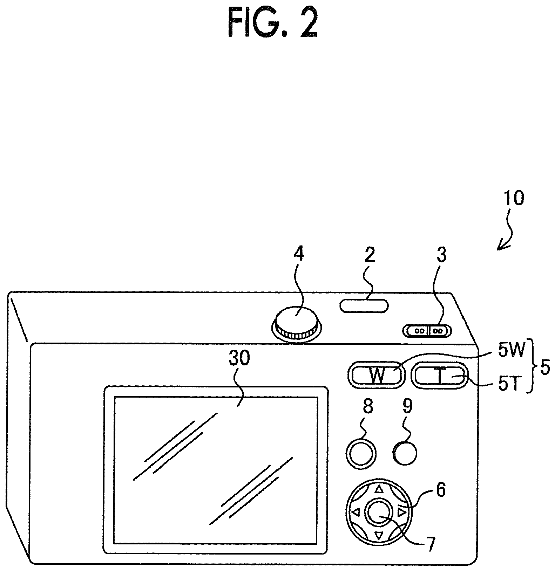

FIG. 1 shows a perspective view illustrating an embodiment of the stereoscopic imaging device according to the invention. FIG. 2 shows a rear elevation view of the stereoscopic imaging device. The stereoscopic imaging device 10 is a digital camera which receives light passing through a lens by an imaging device, converts the light into a digital signal, and records the digital signal in a recording medium such as a memory card.

As shown in FIG. 1, in the stereoscopic imaging device 10, an imaging lens 12, a flash 1, and the like are arranged on a front surface, and a shutter button 2, a power/mode switch 3, a mode dial 4, and the like are arranged on a top surface. In contrast, as shown in FIG. 2, a stereoscopic liquid crystal monitor 30 for stereoscopic display, a zoom button 5, a cross button 6, a MENU/OK button 7, a reproduction button 8, a BACK button 9, and the like are arranged on a rear surface of the camera.

The imaging lens 12 is constituted by a collapsible zoom lens, and when a camera mode is set to an imaging mode by the power/mode switch 3, the imaging lens 12 continuously extends from a camera main body. The flash 1 emits a flash toward a main subject.

The shutter button 2 is constituted by a two-stage stroke switch including so-called "half-pressing" and "full-pressing". In the stereoscopic imaging device 10, when the shutter button 2 is subjected to "half-pressing" in a state of being driven in an imaging mode, AE and AF operate. Next, when the AE and AF operations are terminated and the shutter button 2 is subjected to "full-pressing", imaging is carried out. In addition, when the shutter button 2 is subjected to the "full-pressing" in a state of being driven in the imaging mode, the stereoscopic imaging device 10 carries out imaging.

The power/mode switch 3 has a function as a power switch which turns ON/OFF the power of the stereoscopic imaging device 10, and a function as a mode switch which sets a mode of the stereoscopic imaging device 10. The power/mode switch 3 is disposed between an "OFF position", a "reproduction position", and an "imaging position" in a slidable manner. In the stereoscopic imaging device 10, when the power/mode switch 3 is allowed to slide to the "reproduction position" or the "imaging position", power is turned ON, and when the power/mode switch 3 is allowed to slide to the "OFF position", power is turned OFF. In addition, when the power/mode switch 3 is allowed to slide to the "reproduction position", a "reproduction mode" is set, and when the power/mode switch 3 is allowed to slide to the "imaging position", a "imaging mode" is set.

The mode dial 4 functions as an imaging mode setting unit which sets the imaging mode of the stereoscopic imaging device 10, and the imaging mode of the stereoscopic imaging device 10 is set to various modes according to the setting position of the mode dial. Examples of the imaging mode include a "two-dimensional image imaging mode" in which imaging of a two-dimensional image is carried out, a "stereoscopic image imaging mode" in which imaging of a stereoscopic image is carried out, a "moving image imaging mode" in which imaging of a moving image is carried out, and the like.

The stereoscopic liquid crystal monitor 30 is a stereoscopic display unit which is capable of displaying a stereoscopic image (a left parallax image and a right parallax image) as a directional image having a predetermined directivity using a parallax barrier. In a case where a stereoscopic image is input to the stereoscopic liquid crystal monitor 30, a parallax barrier having a pattern in which a light transmitting portion and a light shielding portion are alternately arranged at a predetermined pitch is generated in a parallax barrier display layer of the stereoscopic liquid crystal monitor 30, and strip-shaped image pieces showing left and right images are alternately arranged and are displayed on an image display plane on a lower layer side of the parallax barrier display layer. In a case where the stereoscopic liquid crystal monitor 30 is used as a two-dimensional image or user interface display panel, the parallax barrier display layer does not display anything and a piece of image is displayed as is on the image display plane on the lower layer side of the parallax barrier display layer. In addition, the type of the stereoscopic liquid crystal monitor 30 is not limited to the above-described example, and may be a type using a lenticular lens, or a type allowing a user to individually view the left parallax image and the right parallax image when wearing dedicated eyeglasses such as polarization eyeglasses and liquid crystal shutter eyeglasses may be used as long as the stereoscopic liquid crystal monitor 30 is capable of displaying the left parallax image and the right parallax image to be recognizable as a stereoscopic image.

The zoom button 5 functions as a zoom instruction unit that gives an instruction for a zoom and is constituted by a telescopic button 5T which gives an instruction for a telephoto side zoom and a wide button 5W which gives an instruction for a wide-angle side zoom. In the stereoscopic imaging device 10, when the telescopic button 5T and the wide button 5W are manipulated in the imaging mode state, a focal length of the imaging lens 12 varies. In addition, when the telescopic button 5T and the wide button 5W are manipulated in the reproduction mode state, an image during reproduction is enlarged or reduced.

The cross button 6 is a manipulation unit which inputs an instruction for four upper, lower, left, and right directions, and functions as a button (cursor movement manipulation unit) which selects an item on a menu screen or gives an instruction for selection of various setting items from the menu. Left and right keys function as frame advance (forward advance and rearward advance) buttons in a reproduction mode state.

The MENU/OK button 7 is a manipulation key having a function as a menu button which gives an instruction for displaying a menu on a screen of the stereoscopic liquid crystal monitor 30 and a function as an OK button which gives an instruction for selection and execution of selected content, and the like.

The reproduction button 8 is a button for switching into a reproduction mode in which an imaged and recorded stereoscopic image, a still screen of a two-dimensional image, or a moving image is displayed on the stereoscopic liquid crystal monitor 30.

The BACK button 9 functions as a button giving an instruction for cancelling input manipulation or returning to an immediately previous manipulation state.

### [Configuration Example of Imaging Optical System and Imaging Device]

The imaging lens 12 is an imaging optical system constituted by a plurality of lenses including a focus lens and a zoom lens. For example, an aperture 14 is constituted by five sheets of aperture blades, and controls an aperture value (F-stop) from F2 to F16 continuously or step by step. In the imaging mode state, image light showing a subject forms an image on a light-receiving surface of the imaging device 16 through the imaging lens 12 and the aperture 14.

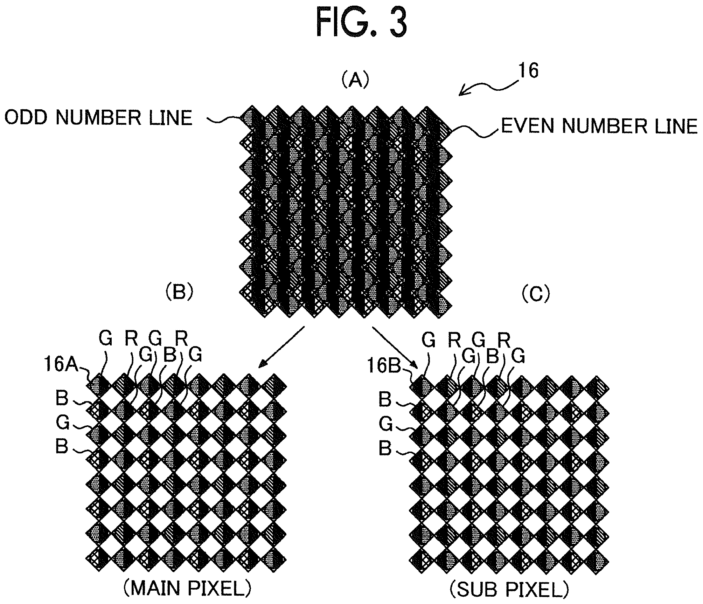

FIG. 3 shows a view illustrating a configuration example of the imaging device 16.

The imaging device 16 is constituted as a CCD image censor for detection of a parallax image (phase difference), and includes pixels (also referred to as first pixels, A plane pixels) of odd number lines and pixels (also referred to as second pixels, B plane pixels) of even number lines which are arranged in a matrix shape, and image signals of two planes, which are photoelectrically converted at the first and second pixels, can be independently read out.

As shown in FIG 3, among pixels including R (red), G (green), and B (blue) color filters, a pixel arrangement line of GRGR ···, and a pixel arrangement line of BGBG ··· are alternately provided in odd number lines (1, 3, 5, ···) of the imaging device 16. On the other hand, with regard to pixels of even number lines (2, 4, 6, ···), similar to the odd number lines, a pixel arrangement line of GRGR ···, and a pixel arrangement line of BGBG ··· are alternately provided. In addition, the pixels of the odd number lines are disposed to deviate by 1/2 pitch in a line direction with respect to the pixels of the even number lines.

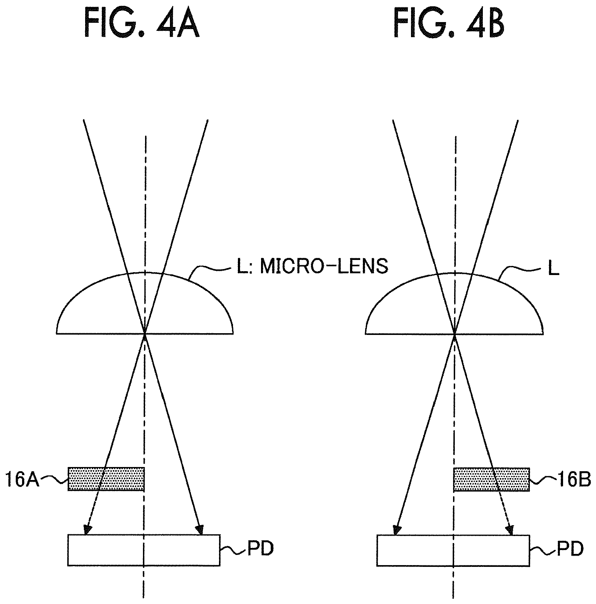

FIGS. 4A to 4C show enlarged views illustrating main portions of the imaging device 16 which functions as a phase-difference image sensor.

As shown in FIG 4A, a light shielding member 16A is arranged on a front surface side (on a micro-lens L side) of a photodiode PD of each of the first pixels of the imaging device 16. On the other hand, as shown in FIG 4B, a light shielding member 16B is arranged on a front surface side of a photodiode PD of each of the second pixels. The micro-lens L and the light shielding members 16A and 16B have a function as a pupil division unit, and as shown in FIG 4A, the light shielding member 16A shields the left half of the light receiving surface of the first pixel (photodiode PD). Accordingly, only luminous fluxes, which pass through an exit pupil of the imaging lens 12 on a left side of an optical axis, are received by the first pixel. In addition, as shown in FIG 4B, the light shielding member 16B shields the right half of the light receiving surface of the second pixel (photodiode PD). Accordingly, only luminous fluxes, which pass through the exit pupil of the imaging lens 12 on a right side of the optical axis, are received by the second pixel. In this manner, the luminous fluxes, which pass through the exit pupil, are divided into left-side luminous fluxes and right-side luminous fluxes by the micro-lens L and the light shielding members 16A and 16B, which are the pupil division units, and are incident to the first pixel and the second pixel, respectively.

In addition, in a subject image corresponding to the left-half luminous fluxes among the luminous fluxes which pass through the exit pupil of the imaging lens 12, and a subject image corresponding to the right-half luminous fluxes among the luminous fluxes, portions which are in focus are formed at the same position on the imaging device 12, but a portion relating to a lens focal point in front of the subject and a portion relating to a lens focal point behind the subject are respectively incident to positions different from each other on the imaging device 12 (a phase deviates). According to the incidence, the subject image corresponding to the left-half luminous fluxes and the subject image corresponding to the right-half luminous fluxes can be acquired as parallax images (left parallax image and right parallax image) having parallax different in each case. In addition, the imaging device 16 of this embodiment is a CCD image sensor, but there is no limitation to the above-described example, and a CMOS type image sensor is also possible.

### [Internal Configuration of Stereoscopic Imaging Device]

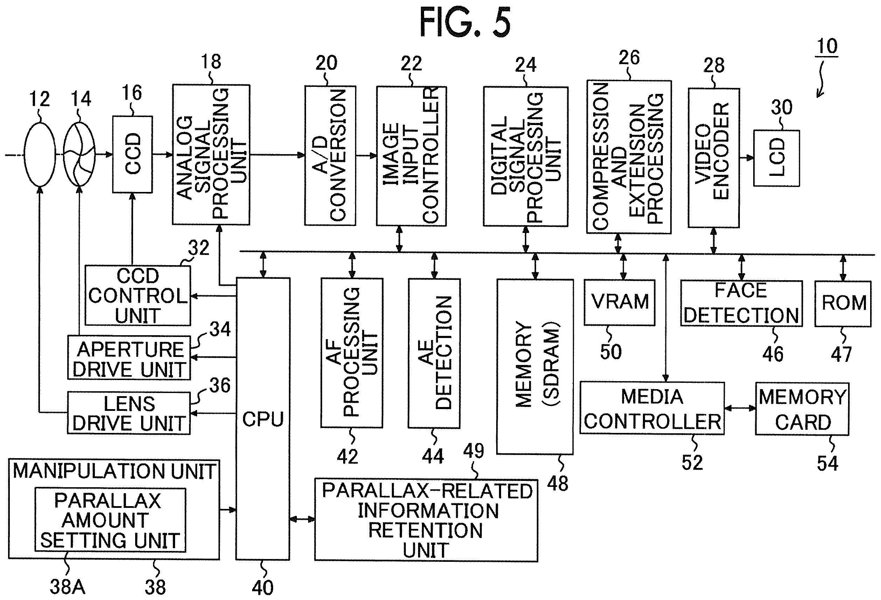

FIG 5 shows a block diagram illustrating an embodiment of an internal configuration of the stereoscopic imaging device 10 according to the invention. The stereoscopic imaging device 10 records an imaged image in a memory card 54, and the overall operation of the stereoscopic imaging device 10 is collectively controlled by a central processing unit (CPU) 40.

A manipulation unit 38 of the shutter button, the mode dial, the reproduction button, the MENU/OK key, the cross key, the zoom button, the BACK key, and the like is provided to the stereoscopic imaging device 10. A signal transmitted from the manipulation unit 38 is input to the CPU 40, and the CPU 40 controls each circuit of the stereoscopic imaging device 10 on the basis of the input signal, and carries out, for example, lens drive control, aperture drive control, imaging operation control, image processing control, recording and reproducing control of image data, display control of the stereoscopic liquid crystal monitor 30, and the like.

When the power of the stereoscopic imaging device 10 is turned ON by the power/mode switch 3, power is supplied to each block from a power supply unit (not shown), and driving of the stereoscopic imaging device 10 is initiated.

Luminous fluxes passed through the imaging lens 12, the aperture 14, and the like form an image on the imaging device 16, and signal charges are accumulated in the imaging device 16. The signal charges accumulated in the imaging device 16 are read out as voltage signals corresponding to the signal charges on the basis of a read-out signal supplied from a timing generator (not shown). The voltage signal read out from the imaging device 16 is supplied to an analog signal processing unit 18.

The analog signal processing unit 18 carries out a correlated double-sampling process (a process of obtaining correct pixel data by obtaining a difference between a feed-through component level and a pixel signal component level which are included in an output signal for each pixel of the imaging device so as to reduce noise (particularly, thermal noise) included in output signals of the imaging device) with respect to the voltage signals output from the imaging device 16 to sampling-hold R, G, and B signals for each pixel. In addition, the R, G, and B signals which are sampled are supplied to an A/D converter 20 after being amplified. The A/D converter 20 converts the R, G, and B signals, which are sequentially input, to digital R, G, and B signals, and outputs the resultant digital signals to an image input controller 22.

A digital signal processing unit 24 carries out a predetermined signal process such as an offset process, a gain and control process including white balance correction and sensitivity correction, a gamma correction process, and a YC process with respect to a digital image signal which is input through the image input controller 22. Here, first image data which is read out from the first pixels of odd number lines of the imaging device 16 is processed as left parallax image data, and second image data which is read out from the second pixels of even number lines is processed as right parallax image data.

The left parallax image data and the right parallax image data (stereoscopic image data) which are processed by the digital signal processing unit 24 are input to a VRAM 50. The VRAM 50 includes an A region and a B region in which the stereoscopic image data representing a stereoscopic image for one frame is recorded. In the VRAM 50, the stereoscopic image data indicating a stereoscopic image for one frame may be alternately rewritten in the A region and the B region. Stereoscopic image data which is written is read out from a region other than the region in which the stereoscopic image data is rewritten between the A region and the B region of the VRAM 50.

The stereoscopic image data which is read out from the VRAM 50 is encoded in a video encoder 28 and is output to the stereoscopic liquid crystal monitor 30 which is provided on a rear surface of a camera. According to the output, a stereoscopic subject image is continuously displayed on a display screen of the stereoscopic liquid crystal monitor 30.

When first-stage pressing (half-pressing) of the shutter button 2 of the manipulation unit 38 is performed, the CPU 40 initiates the AF operation and the AE operation and moves a focus lens in an optical axis direction through a lens drive unit 36, thereby carrying out control in order for the focus lens to be a in focusing position.

An AF processing unit 42 is a unit which carries out a contrast AF process or a phase difference AF process. In a case of carrying out the contrast AF process, the AF processing unit 42 extracts a high-frequency component of a parallax image in a predetermined focusing region among parallax images of at least one side of the left and right parallax images, and integrates the high-frequency component to calculate an AF evaluation value indicating a focusing state. The AF processing unit 42 carries out the AF control by controlling the focus lens in the imaging lens 12 in such a manner that the AF evaluation value becomes the maximum. In addition, in a case of carrying out the phase difference AF process, the AF processing unit 42 detects a phase difference of parallax images, which are in a predetermined focus region and which correspond to the first image and the second image, among the left and right parallax images, and obtains a defocusing amount on the basis of information indicating the phase difference. The AF processing unit 42 carries out the AF control by controlling the focus lens in the imaging lens 12 in such a manner that the defocusing amount becomes zero.

The CPU 40 also functions as a focal length setting unit, and forwardly and backwardly moving a zoom lens in an optical axis direction through the lens drive unit 36 in response to a zoom command from the zoom button 5, thereby changing the focal length.

In addition, the image data, which is output from the A/D converter 20 in a state in which the shutter button 2 is half-pressed, is received by an AE detection unit 44.

The AE detection unit 44 integrates G signals of the entirety of the screen or integrates G signals which are subjected to different weighting at each of a screen central portion and a peripheral portion, and outputs the integrated value to the CPU 40. The CPU 40 also functions as a photometry unit and calculates brightness (imaging Ev value) of the subject using an integrated value input from the AE detection unit 44. The CPU 40 determines the F-stop of the aperture 14 and an electronic shutter (shutter speed) of the imaging device 16 according to a predetermined program diagram on the basis of the imaging EV value.

Here, the program diagram is a diagram in which imaging (exposure) conditions including a combination of an aperture value of the aperture and the shutter speed, or a combination of the aperture value, the shutter speed, and the imaging sensitivity (ISO sensitivity) are designed in correspondence with brightness of the subject. When imaging is carried out under the exposure conditions determined according to the program diagram, an image having appropriate brightness can be imaged regardless of brightness of the subject.

In FIG. 5, a reference numeral 46 indicates a face detection circuit of the related art which detects the face of a person in an imaging angle of view, and sets an area including the face as an AF area and an AE area (for example, Japanese Unexamined Patent Publication JP-A 9-101579 (1997)). In addition, a reference numeral 47 indicates a ROM (EEPROM) in which a camera control program, defect information of the imaging device 16, various parameters or tables which are used for image processing and the like, a plurality of parallax priority program diagrams according to the invention, and the like are stored in addition to an aperture priority program diagram, a shutter speed priority program diagram, or a program diagram (typical program diagram) which alternately or simultaneously changes the aperture and the shutter speed in correspondence with brightness of the subject. That is, the ROM 47 also functions as a program diagram storage unit. In addition, details of the parallax priority program diagram (hereinafter, referred to as a "parallax priority program diagram") will be described later.

### <Stereoscopic Vision Limit>

A parallax-related information retention unit 49 also functions as a parallax-related information storage unit, and retains a combination of the F-stop and the focal length with which the left and right parallax images have a predetermined minimum parallax amount. The combination represents parallax-related information.

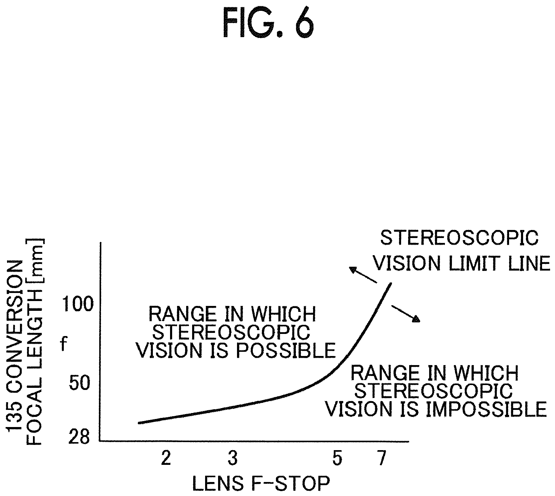

Here, as shown in FIG. 6, the parallax-related information is information which indicates a stereoscopic vision limit line of equal parallax and which depends on the imaging device 16. The information is obtained by plotting a combination of the F-stop and the focal length with which the maximum parallax amount of the left and right parallax images in a state in which the subject is at a near end and at infinity of an imaging distance range becomes a predetermined minimum parallax amount.

In addition, the parallax-related information may be parallax-related information indicating a combination of the F-stop of the aperture and the focal length of the imaging optical system with which a parallax amount between near and distant subject images in a state in which the subject is located on a near side and on a distant side in a desired imaging distance range of the imaging optical system is in at least one of predetermined parallax amount range. The parallax-related information represents a relationship between the parallax amount, the F-stop of the aperture, and the focal length of the imaging optical system.

For example, in a case where the parallax amount of the left and right parallax images is less than one pixel of the imaging device 16, it is difficult to stereoscopically view the parallax image. Accordingly, the predetermined parallax amount can be set as a parallax amount corresponding to a pitch of one pixel of the imaging device 16.

As shown in FIG. 6, under imaging conditions in which an F-stop and a focal length (a focal length in a case of converting the size of the imaging device to 135 film size), in a range which is on a right side of the stereoscopic vision limit line and in which stereoscopic vision is impossible, are combined, it is difficult to image a parallax image having a parallax amount exceeding a predetermined parallax amount even when imaging any subject (it is difficult to carry out the stereoscopic imaging). On the other hand, under imaging conditions, in which an F-stop and a focal length in a range which is on a left side of the stereoscopic vision limit line and in which stereoscopic vision is possible, are combined, it is possible to image a parallax image with which stereoscopic vision is possible regardless of a distance distribution of the subject and the like.

In addition, the parallax-related information retention unit 49 stores a plurality of pieces of parallax-related information with a different parallax amount, and a user can set a desired parallax amount using a parallax amount setting unit 38A of the manipulation unit 38. That is, the parallax amount setting unit 38A also functions as a parallax amount setting unit.

A mode setting unit, which sets a first mode in which exposure conditions such as the F-stop and the shutter speed are automatically set by the AE process, and a second mode in which the F-stop, the shutter speed, and the like are set with a manual operation, is provided to the manipulation unit 38. The CPU 40 changes a process relating to an exposure state in accordance with the first mode or the second mode which is set.

That is, the CPU 40 also functions as a control unit. In a case where the first mode is set, the CPU 40 selects a parallax priority program diagram with which a parallax amount is not less than a predetermined parallax amount on the basis of the focal length of the imaging lens 12 and the parallax-related information retained in the parallax-related information retention unit 49. In addition, the CPU 40 also functions as an exposure condition determination unit, and determines exposure conditions (the F-stop and the shutter speed) according to the parallax priority program diagram which is selected. Further, the CPU 40 also functions as an exposure control unit, and controls the aperture 14 through an aperture drive unit 34 according to the determined exposure conditions. In addition, the CPU 40 controls a charge accumulation time of the imaging device 16 through the CCD drive unit 32.

On the other hand, the CPU 40 also functions as a determination unit and a notification unit. In a case where the second mode is set, the CPU 40 determines whether or not a parallax amount is less than a predetermined parallax amount on the basis of the F-stop of the aperture 14 and the focal length of the imaging lens 12 which are manually set, and the parallax-related information retained in the parallax-related information retention unit 49, and gives a notification of the determination result on a screen of the stereoscopic liquid crystal monitor 30. In addition, a notification aspect is not limited to the notification on the screen of the stereoscopic liquid crystal monitor. For example, the notification aspect includes an aspect of transmitting the determination result to an externally connected device. In addition, the determination result is not limited to information indicating whether or not stereoscopic vision is possible. For example, the determination result may be information indicating an alternative focal length and/or an alternative F-stop, and the like.

When the AE operation and the AF operation are completed, and the second-stage pressing (pull pressing) of the shutter button 2 is performed, two pieces of image data of the left parallax image (first image) and the right parallax image (second image) corresponding to the first pixel and the second pixel, which are output from the A/D converter 20 in response to the pressing, are input to a memory (SDRAM) 48 from the image input controller 22 and are temporarily stored.

The two pieces of image data which are temporarily stored in the memory 48 are appropriately read out by the digital signal processing unit 24, and are subjected to a predetermined signal processing including a process (YC process) of generating luminance data and color difference data of image data. The image data (YC data) which is YC-processed is stored again in the memory 48. Subsequently, two pieces of YC data are output to a compression and extension processing unit 26 and are subjected to a predetermined compression process such as joint photographic experts groups (JPEG), and are stored again in the memory 48.

A multi-picture file (MP file: a file of a type in which a plurality of images are connected) is generated from the two pieces of YC data (compressed data) stored in the memory 48, and the MP file is read out by a media controller 52 and is recorded in the memory card 54.

In addition, the AF operation is carried out not only in a case where the first stage pressing (half-pressing) of the shutter button 2 is performed but also in a case where the left parallax image of the left and right parallax images is continuously imaged. Examples of the case of continuously imaging the left and right parallax images include a case of imaging a live view image (through image) and a case of imaging a moving image.

The stereoscopic imaging device 10 can acquire not only the stereoscopic image but also a two-dimensional image.

### [First Embodiment of Stereoscopic Imaging Operation]

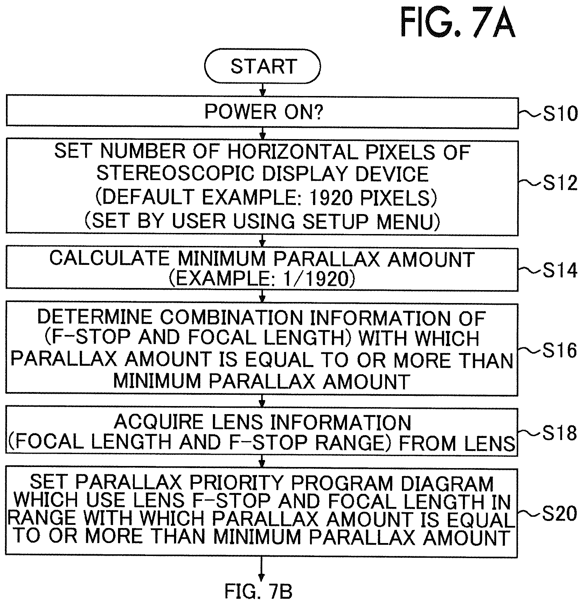

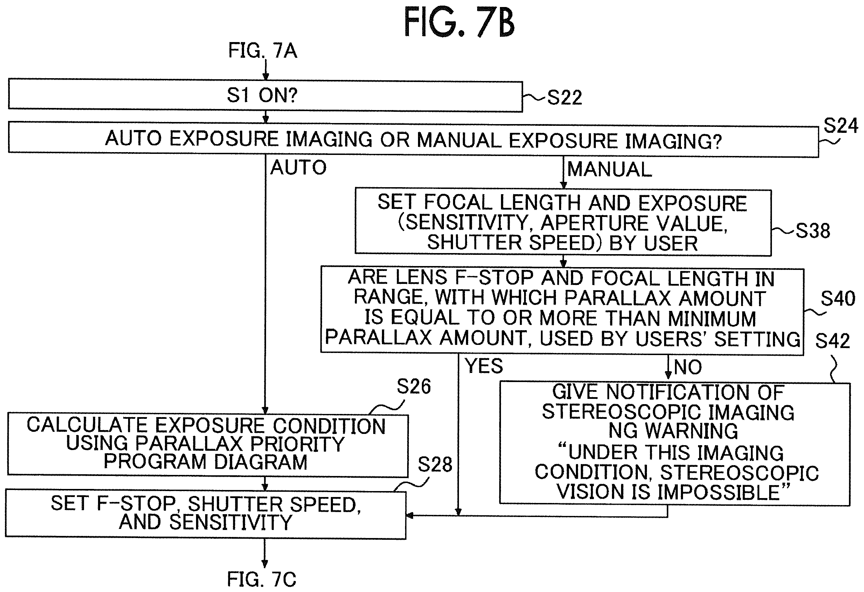

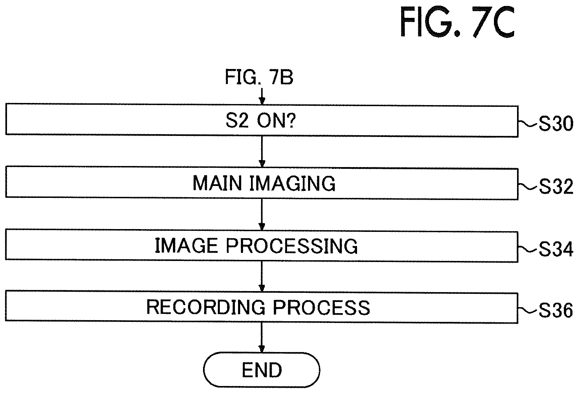

FIGS. 7A to 7C show a flowchart illustrating a first embodiment of the stereoscopic imaging operation of the stereoscopic imaging device 10 according to the invention, and shows processes from start-up to termination of imaging.

In FIGS. 7A to 7C, first, when the power/mode switch 3 is turned on, a processing operation is initiated (step S10).

Subsequently, resolution information (the number of horizontal pixels) of an external stereoscopic display device, which is typically used when watching a stereoscopic image imaged by the stereoscopic imaging device 10, is set by a user on a setup menu (step S12). In addition, as a default setting example, the number of horizontal pixels (1920 pixels) of a stereoscopic display device having resolution of a full HD television (full high-definition television) may be exemplified.

In step S14, a predetermined parallax amount (minimum parallax amount) is calculated on the basis of the number of horizontal pixels which is set in step S12 and the calculated minimum parallax amount is set. In addition, as a calculation example of the minimum parallax amount, 1/the number of horizontal pixels of a typically used stereoscopic display device (for example, (1/1920)×100[%]≈0.05) may be exemplified.

Next, parallax-related information (information about a combination of the F-stop and the focal length), with which a parallax amount is equal to or more than the minimum parallax amount calculated in step S14, is selected from the plurality of pieces of parallax-related information retained in the parallax-related information retention unit 49 (step S16).

Subsequently, the CPU 40 calculates brightness (imaging Ev value) of the subject using an integrated value which is input from the AE detection unit 44 to acquire information (lens information) indicating a current focal length of the imaging lens 12 and the F-stop of the aperture 14 (step S18). Next, the CPU 40 selects a parallax priority program diagram which uses the lens F-stop and the focal length in a range with which a parallax amount is equal to or more than the minimum parallax amount (step S20). In addition, the focal length of the imaging lens 12 is acquired when the CPU 40 also functioning as the focal length detection unit detects a lens position of the imaging lens 12. In addition, the focal length can be acquired from a zoom command value output to the lens drive unit 36 from the CPU 40 on the basis of manipulation of the zoom button 5.

### <Parallax Priority Program Diagram>

Next, the parallax priority program diagram will be described.

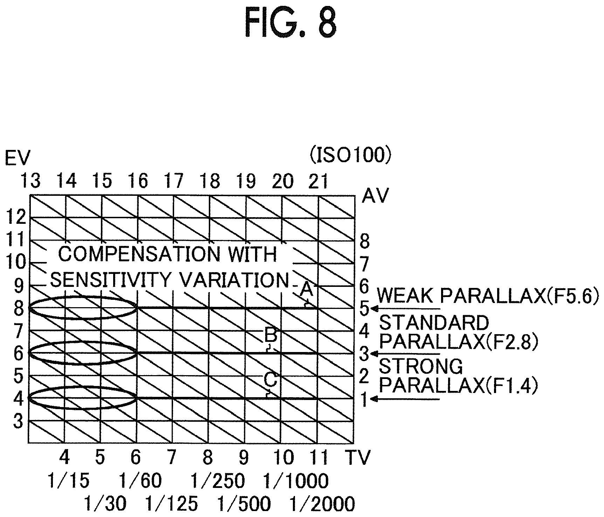

FIG. 8 shows a view illustrating an example of a plurality of parallax priority program diagrams. In FIG 8, A, B, and C indicate parallax priority program diagrams which correspond to a weak parallax, a standard parallax, and a strong parallax, respectively.

The parallax priority program diagram A is designed in such a manner that the F-stop has a constant value of 5.6 (AV=5), and only the shutter speed is made to vary from 1/60 seconds (TV=6) to 1/2000 seconds (TV=11) in correspondence with the imaging EV value in an imaging EV value range from 11 to 16. In addition, when the imaging EV value becomes less than 11 (becomes dark), ISO sensitivity is designed to be 200, 400, 800, 1600, 3200 from 100 whenever the imaging EV value decreases by 1 EV in a state in which the F-stop is fixed to 5.6 and the shutter speed is fixed to 1/60 seconds.

In addition, in a case where the shutter speed becomes slower than 1/60 seconds, the shutter speed is fixed to 1/60 seconds, and sensitivity is raised. The reason for this is because it is not susceptible to an effect of camera shake in an imaging state. A camera-shake limit shutter speed typically depends on a focal length (35 mm film equivalent) and 1/focal length [seconds] is defined. For example, in a case where the focal length is 60 mm on the assumption of a 35 mm film, 1/60 seconds is a camera-shake limit shutter speed. In addition, in a case of a stereoscopic imaging device having a camera-shake compensation function, the camera-shake limit shutter speed may be set to be still slower.

Similarly, the parallax priority program diagram B is designed in such a manner that the F-stop has a constant value of 2.8 (AV=3), and when the imaging EV value becomes smaller than 9, sensitivity is gradually raised. In addition, the parallax priority program diagram C is designed in such a manner that the F-stop has a constant value of 1.4 (AV=1), and when the imaging EV value becomes smaller than 7, sensitivity is gradually raised.

In addition, in the parallax priority program diagram A, B, or C, since the F-stop is fixed, when the imaging EV value becomes larger than 16, 14, or 12 (when the shutter speed becomes the maximum value), exposure becomes excessive. Therefore, it is difficult to carry out imaging. However, if a configuration of automatically inserting an ND filter to reduce an amount of light is added to the stereoscopic imaging device 10, even when the imaging EV value becomes larger than 16, 14, or 12, imaging can be carried out.

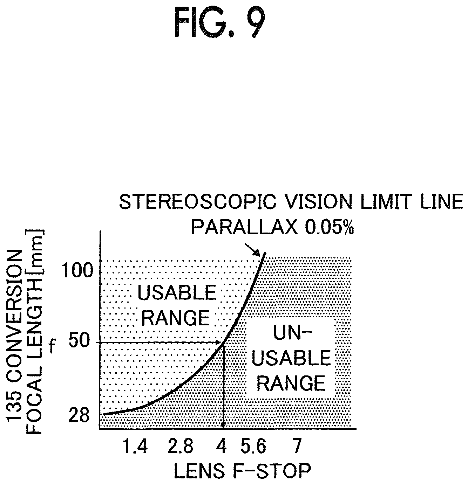

For example, as shown in FIG. 9, in a case where 0.05% of minimum parallax amount is set as a stereoscopic vision limit line in step S16, when the focal length of the imaging lens 12 which is acquired in step S18 is set to 50 mm, it is necessary for the lens F-stop of F4 or less to be used. In this case, in step S20 in FIGS. 7A to 7C, it is necessary to select B or C among the parallax priority program diagrams A to C which are shown in FIG. 8. In a case where a user sets "standard" as the magnitude of a stereoscopic effect by the manipulation unit 38 which functions as a parallax intensity instruction unit, the parallax priority program diagram B is set, and in a case where the user sets a strong parallax, the parallax priority program diagram C is set.

After the setting, it is determined whether or not the shutter button is half-pressed (S1 is ON) (step S22). When the S1 is ON, the CPU 40 determines whether or not the first mode or the second mode is set as an exposure setting mode (step S24).

In a case where the first mode is set, exposure conditions including the F-stop of the aperture 14, the shutter speed, and the imaging sensitivity are calculated on the basis of the parallax priority program diagram set in step S20, and the imaging Ev value which is calculated in advance (step S26), and the calculated exposure conditions are set (step S28).

After the setting, it is determined whether or not the shutter button is fully pushed (S2 is ON) (step S28). When the S2 is ON, the CPU 40 carries out main imaging under the exposure conditions set in step S26 (step S32). Left and right parallax images acquired from the imaging device 16 by the main imaging are subjected to predetermined signal processing by the digital signal processing unit 24 (step S34), and are recorded in the memory card 54 through the media controller 52 (step S54). Then, the CPU 40 terminates the imaging.

In the first mode state, since the exposure conditions (particularly, the F-stop) are determined on the basis of the parallax priority program diagram with which a parallax is equal to or more than the minimum parallax amount, the left and right parallax images can be imaged with a parallax amount equal to or more than the minimum parallax amount.

On the other hand, in step S24, when it is determined that the second mode is set, setting of the focal length and setting of exposure which are performed by a user are received (step S38), and it is determined whether or not a combination of the focal length and the F-stop, which is set by a user, is used in a range with which the parallax amount is equal to or more than that defined by parallax-related information (step S40).

In addition, in a case where the parallax amount by a manual setting is equal to or more than the minimum parallax amount (in a case of "Yes"), it transitions to step S28 as is and setting of the manually set exposure conditions is carried out (step S28). On the other hand, in a case where the manual setting value is less than the minimum parallax amount (a case of "No"), a notification indicating that the stereoscopic imaging cannot be carried out (for example, "under these conditions, stereoscopic vision imaging cannot be carried out") is displayed on the stereoscopic liquid crystal monitor 30 (step S42), and then it transitions to step S28.

The user can grasp that it is difficult to carry out the stereoscopic imaging for stereoscopic vision under current imaging conditions (the focal length and the F-stop) due to this notification, and thus the user can change the current imaging conditions into imaging conditions under which the stereoscopic imaging is possible in response to the notification.

In addition, it is not necessary to carry out the processes from step S12 to step S16 in the first embodiment for each imaging, and the processes may be carried out only in a case where setting change of the minimum parallax amount and the like are carried out with a setup menu.

In addition, in the first embodiment, a parallax priority program diagram, with which imaging with a parallax amount equal to or more than the minimum parallax amount selected in advance is possible, is used in the first mode state, but there is no limitation to the above-described example. The parallax priority program diagram may be used in a case where the stereoscopic imaging with a parallax amount equal to or more than the minimum parallax amount cannot be carried out by using a general program diagram (multi-program auto, aperture-priority auto, shutter-priority auto, and the like).

Further, the exposure control in the first mode state may be carried out by using a general program diagram, and the focal length of the imaging lens 12 may be restricted to a range (zoom range), in which the imaging with a parallax amount equal to or more than the minimum parallax amount can be carried out, from the lens F-stop determined by the program diagram.

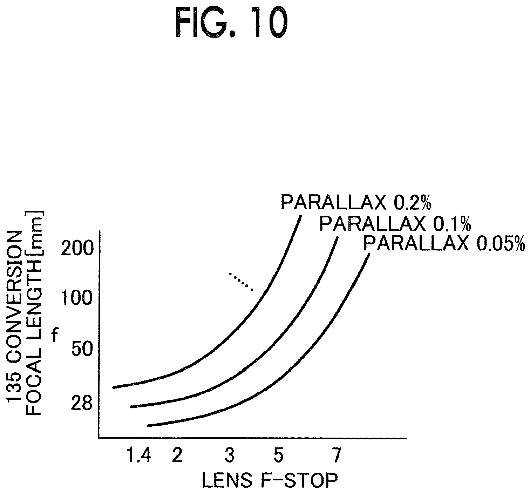

In addition, in steps S12 and S14, the user inputs the resolution information of the external stereoscopic display device to set the minimum parallax amount. However, as shown in FIG. 10, information indicating stereoscopic vision limit lines of a plurality of parallax amounts (for example, 0.05%, 0.1%, and 0.2%) may be prepared, and an appropriate parallax amount may be selected from the minimum parallax amount by user's setting.

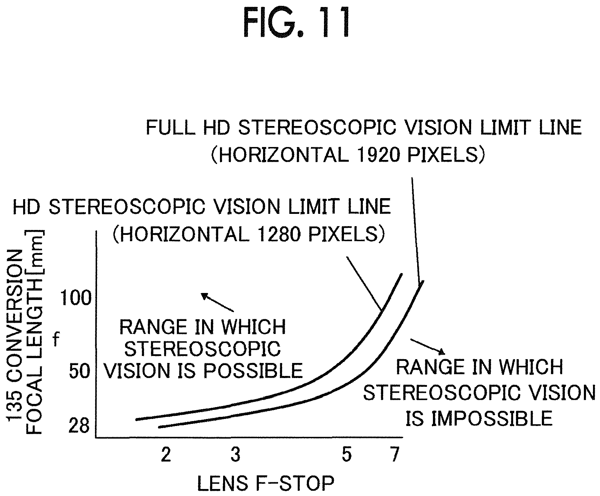

In addition, as shown in FIG. 11, information indicating a stereoscopic vision limit line of a minimum parallax amount according to resolution (full HD: horizontal 1920 pixels, HD: horizontal 1280 pixels) of an external stereoscopic display device may be prepared, and an appropriate parallax amount may be selected from the minimum parallax amount by user's setting.

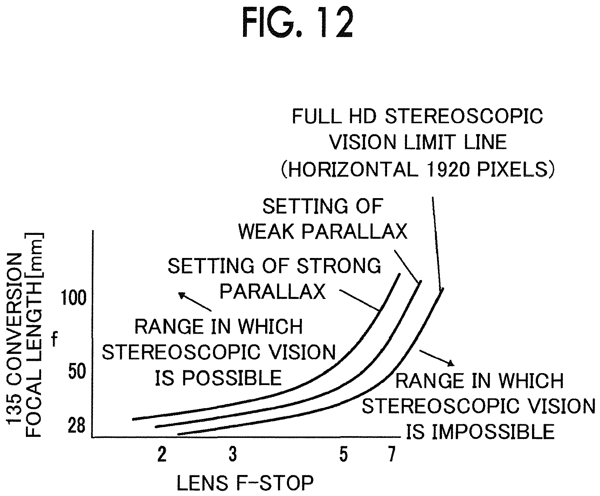

Further, as shown in FIG. 12, information indicating a stereoscopic vision limit line of a minimum parallax amount according to resolution (full HD: horizontal 1920 pixels) of an external stereoscopic display device, and information indicating stereoscopic vision limit lines of a weak parallax and a strong parallax which are larger than the stereoscopic parallax limit line may be prepared, and an appropriate parallax amount may be selected from the parallax amount (parallax intensity) by user's setting.

### [Second Embodiment of Stereoscopic Imaging Operation]

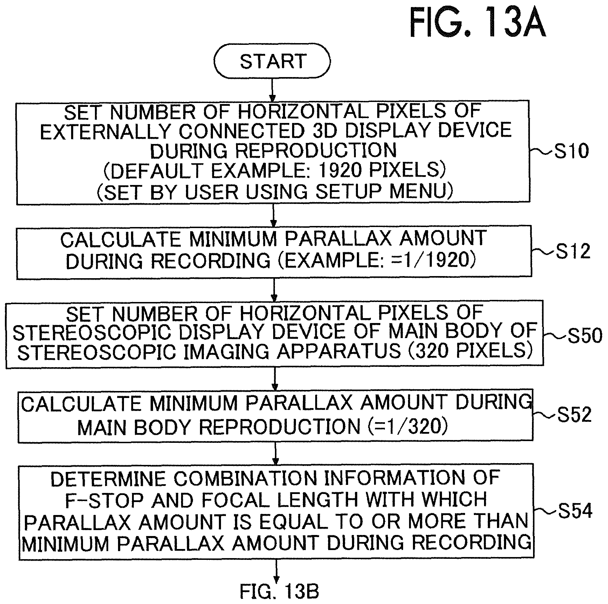

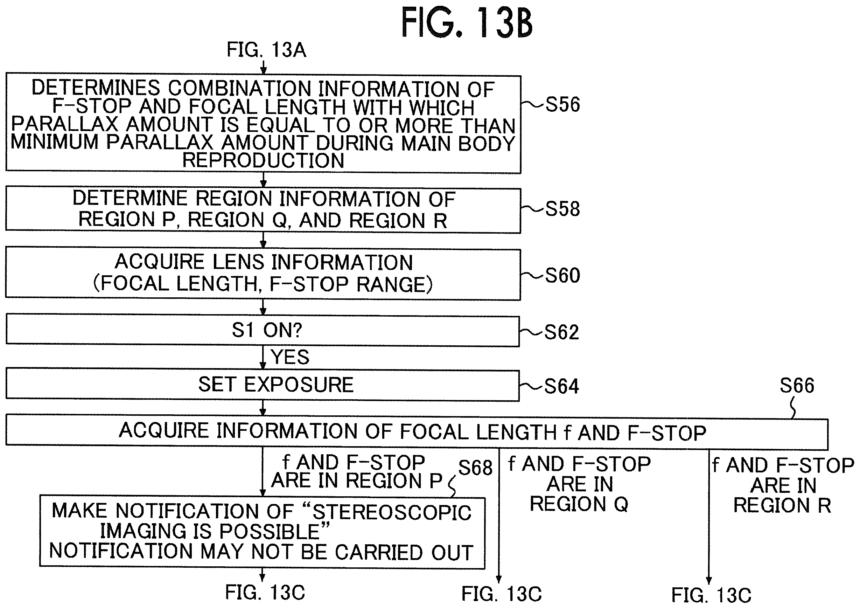

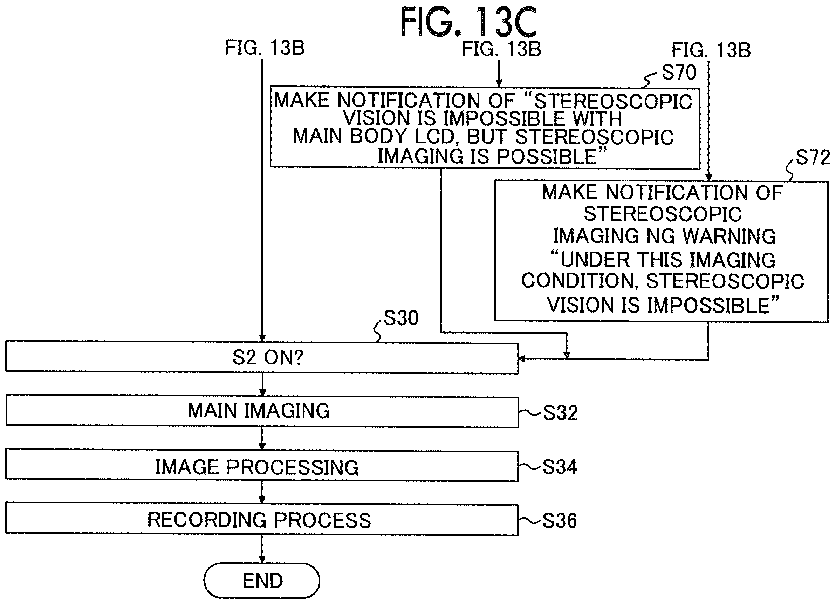

FIGS. 13A to 13C show a flowchart illustrating a second embodiment of the stereoscopic imaging operation of the stereoscopic imaging device 10 according to the invention, and shows processes from start-up to termination of imaging. In addition, the same step numbers are given to portions common to those of the first embodiment shown in FIGS. 7A to 7C, and a description thereof is not repeated.

In FIGS. 13A to 13C, the number of horizontal pixels (for example, 320 pixels) of the stereoscopic liquid crystal monitor 30 provided on a rear surface of a main body of the stereoscopic imaging device 10 is set (step S50), and a parallax amount (=1/320) during reproduction of the main body which is capable of being recognized on the stereoscopic liquid crystal monitor 30 is calculated (step S52). In addition, in a case where the stereoscopic liquid crystal monitor 30 is peculiar to the stereoscopic imaging device, as a minimum parallax amount during a reproduction state of the main body, a minimum parallax amount which is retained in the storage unit inside the stereoscopic imaging device 10 can be used.

Next, information (combination information of the F-stop and the focal length), with which a parallax amount is equal to or more than the minimum parallax amount (minimum parallax amount in a recorded state) calculated in step S12, is selected (step S54), and similarly, information with which a parallax amount is equal to or more than the minimum parallax amount in a main body reproduction state calculated in step S52 is selected (step S56).

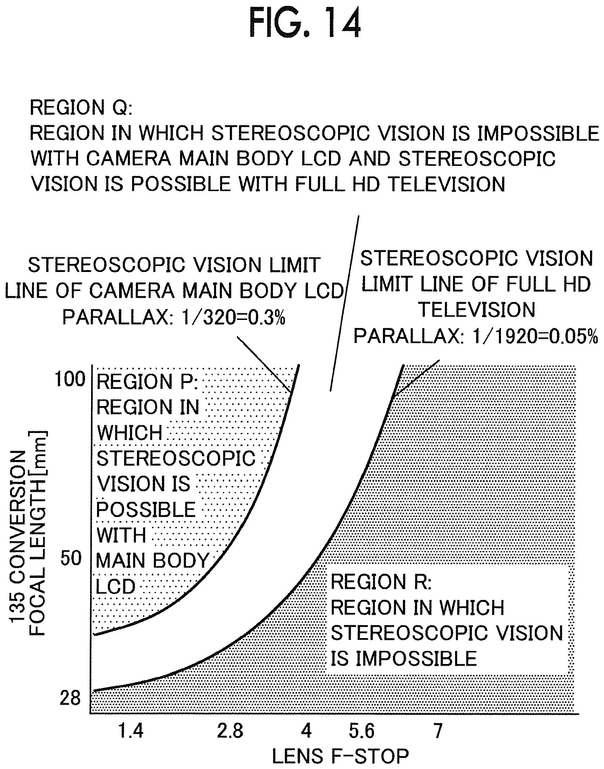

As shown in FIG. 14, a region P in which stereoscopic vision is possible with the stereoscopic liquid crystal monitor 30, a region Q in which stereoscopic vision is impossible with the stereoscopic liquid crystal monitor 30 but stereoscopic vision is possible with the full HD television, and a region R in which stereoscopic vision is impossible also with the full HD television are set according to a stereoscopic vision limit line corresponding to the selected minimum parallax amount in the recorded state and a stereoscopic vision limit line corresponding to the selected minimum parallax amount in the main body reproduction state (step S58).

Subsequently, current lens information (the focal length and the F-stop) is acquired (step S60). After acquisition of the lens information, it is determined whether or not the shutter button is half-pressed (S1 is ON) (step S62). When the S1 is ON, the CPU 40 carries out exposure setting on the basis of brightness of the subject (step S64).

In step S66, the current focal length of the imaging lens 12 and the current F-stop of the aperture which is exposure-set are acquired, and it is determined to which region among the regions P, Q, and R shown in FIG. 14 the combination of the focal length and the F-stop belongs.

In a case where the combination belongs to the region P, a notification that "stereoscopic imaging is possible" is made (step S68). In addition, in this case, the notification may not be made. In a case where the combination belongs to the region Q, a notification of "stereoscopic vision is impossible with the main body LCD, but stereoscopic imaging is possible" is made (step S70). In a case where the combination belongs to the region R, a notification indicating that the stereoscopic imaging is impossible ("under current conditions, stereoscopic imaging is impossible") is made. With regard to a notification method, user-recognizable means such as an LCD display, an LED display, and a voice notification may be exemplified.

In addition, in the second embodiment, a description with respect to the first mode and the second mode of the exposure setting mode described in the first embodiment is not repeated. In addition, in a case of the first mode, the notification in step S72 is not made.

### [Another Overall Configuration of Stereoscopic Imaging Device]

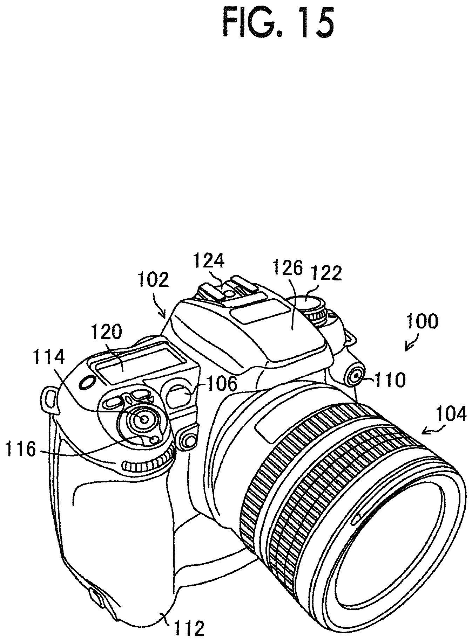

FIG 15 shows a perspective view illustrating another embodiment of the stereoscopic imaging device according to the invention, and shows a lens interchangeable digital single-lens reflex camera.

As shown in FIG. 15, a stereoscopic imaging device 100 includes a camera main body 102, and an interchangeable lens 104 which is detachably mounted on the camera main body 102.

The interchangeable lens 104 is mounted on the camera main body 102 by mounting a lens-side mount, which is provided to a base end of the interchangeable lens 104, on a camera-side mount provided on a front surface of the camera main body 102. In addition, as described later, communication is possible between the camera main body 102 and the interchangeable lens 104.

In addition to the camera-side mount, an AF auxiliary light lamp 106, a synchronized terminal 110, a grip 112, and the like are provided to the front surface of the camera main body 102, and a shutter button 114, a power supply lever 116, a top-surface display panel 120, a mode dial 122, an accessory shoe 124, a flash 126, and the like are provided on the top surface of the camera main body 102.

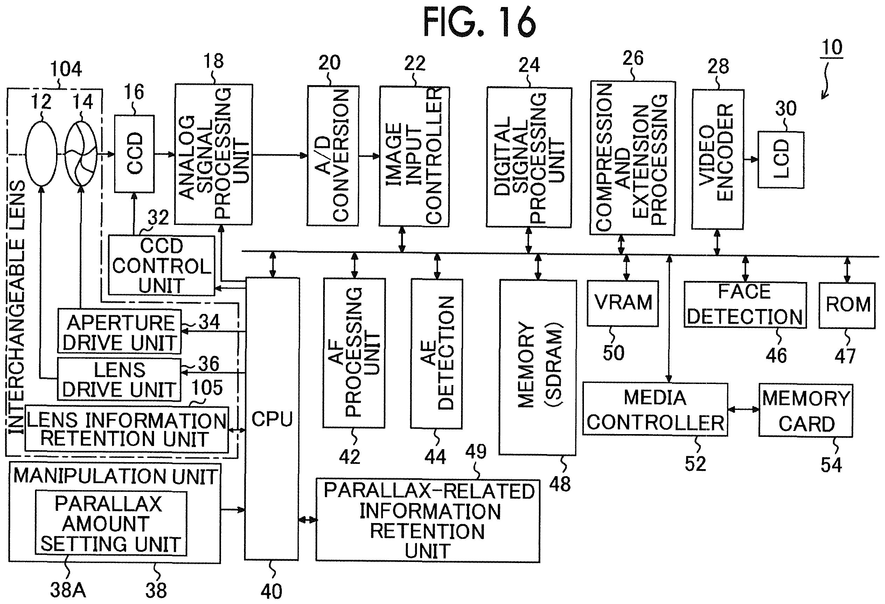

FIG. 16 shows a block diagram illustrating an embodiment of an internal configuration of the stereoscopic imaging device 100. In addition, the same reference numerals are given to portions common to those of the stereoscopic imaging device 10 shown in FIG 5, and a description thereof will not be repeated.

The CPU 40 of the camera main body 102 of the stereoscopic imaging device 100 also functions as a lens information acquisition unit. When the interchangeable lens 104 is mounted on the camera main body 102, the CPU 40 carries out communication with the mounted interchangeable lens 104 to acquire lens information from the interchangeable lens 104. As the lens information, information indicating focal length-open F-stop range of the interchangeable lens may be exemplified.

On the other hand, the interchangeable lens 104 includes a lens information retention unit 105 which stores and retains the lens information, and outputs the lens information in response to an acquisition request of the lens information which is transmitted from the CPU 40.

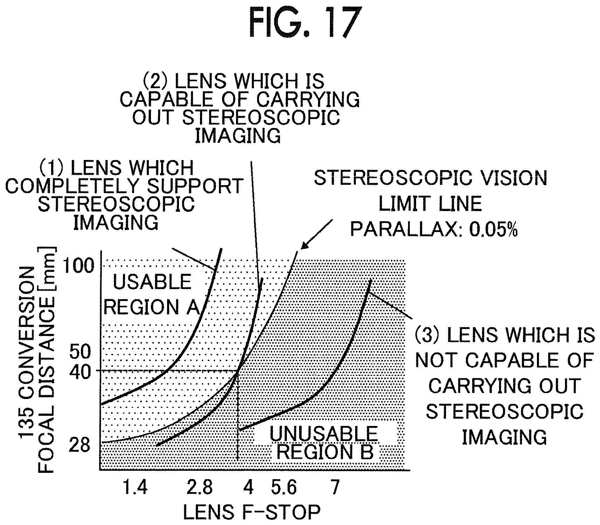

FIG 17 shows a graph illustrating information which indicates a relationship between a combination of focal length-F-stop and parallax which is shown in FIG. 9, and lens information of three kinds of representative interchangeable lenses (1), (2), and (3) in a superimposed manner.

In FIG 17, the interchangeable lens (1) is a lens in which the entire range of focal length-open F-stop belongs to the usable range A, and which completely supports the stereoscopic imaging and is capable of carrying out the stereoscopic imaging.

In the interchangeable lens (2), a partial range of focal length-F-stop belongs to the usable range A, and other ranges of focal length-F-stop belong to the unusable range B. Accordingly, the interchangeable lens (2) is a lens which supports the stereoscopic imaging and which is capable of carrying out the stereoscopic imaging in a case where the focal length is equal to or more than a predetermined focal length (in an example in FIG 17, a focal length of 40 mm).

In the interchangeable lens (3), the entire range of focal length-open F-stop belongs to the unusable range B, and thus the interchangeable lens (3) is a lens which is not capable of carrying out the stereoscopic imaging.

That is, in a case of a dedicated interchangeable lens, the interchangeable lens can be designed to completely support the stereoscopic imaging with respect to the camera main body 102 of the stereoscopic imaging device 100. However, in a case of using a general-purpose interchangeable lens, the general-purpose interchangeable lens may be the lens (2) which supports the stereoscopic imaging and which is capable of carrying out the stereoscopic imaging, or the lens (3) which is not capable of carrying out the stereoscopic imaging.

Accordingly, the CPU 40 of the camera main body 102 of the stereoscopic imaging device 100 also functions as an interchangeable lens determination unit. When the interchangeable lens is mounted, the CPU 40 acquires lens information of the interchangeable lens, and determines to which lens among the three kinds of interchangeable lenses the lens belongs. In addition, the CPU 40 also functions as an interchangeable lens determination result notification unit, and carries out control of the minimum parallax amount, warning display, and the like in response to the determination result.

### [Third Embodiment of Stereoscopic Imaging Operation]

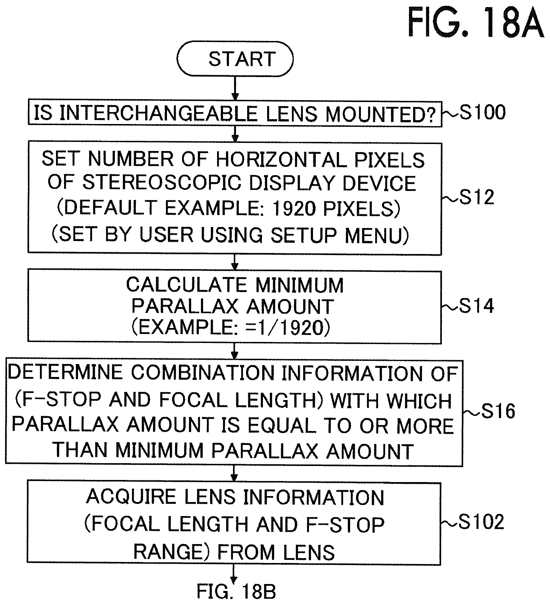

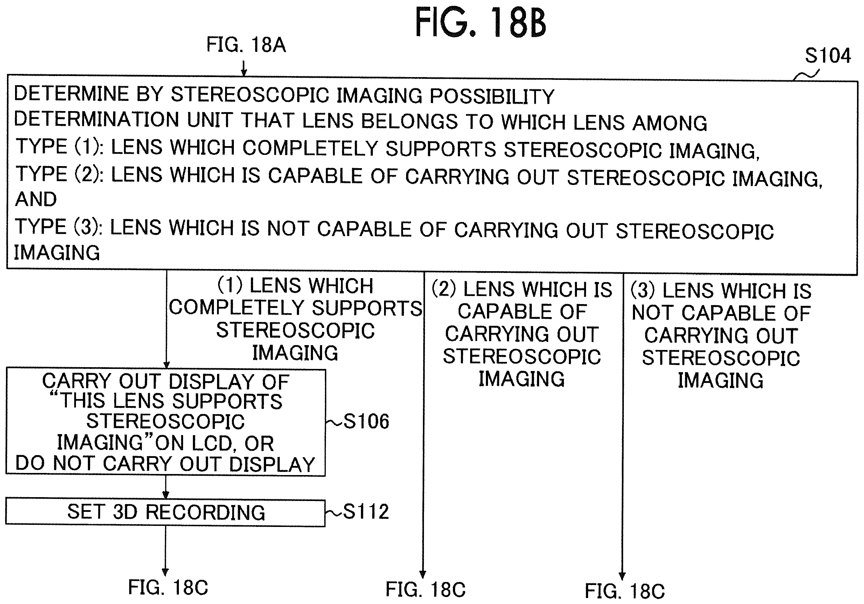

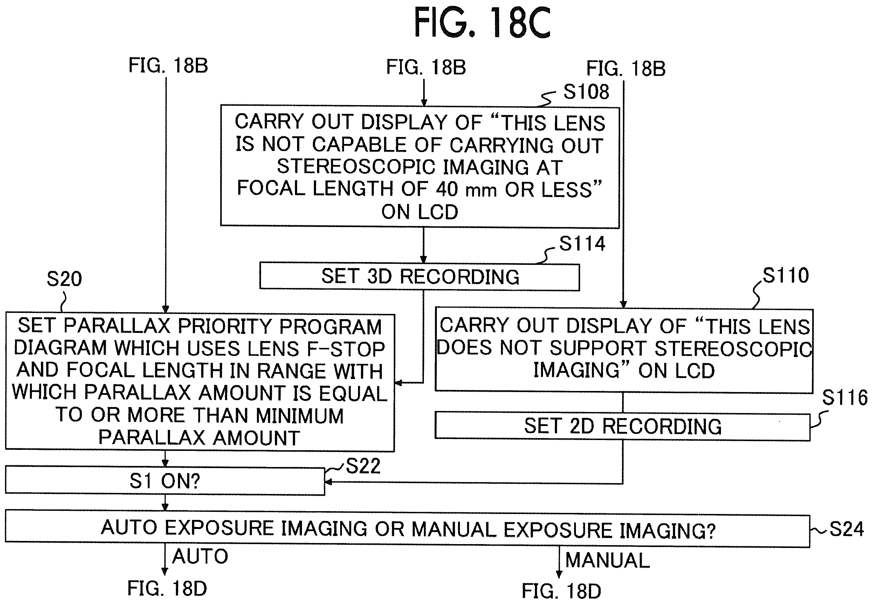

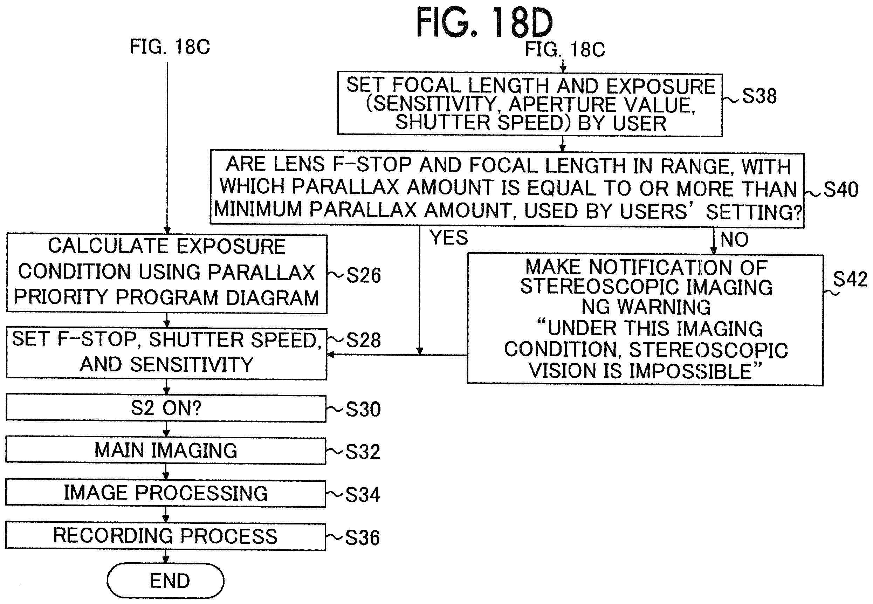

FIGS. 18A to 18D show a flowchart illustrating a third embodiment of the stereoscopic imaging operation of the stereoscopic imaging device according to the invention, and shows processes from start-up to completion of imaging. In addition, the same step numbers are given to portions common to those of the first embodiment shown in FIGS. 7A to 7C, and a description thereof is not repeated.

In FIGS. 18A to 18D, the CPU 40 on the camera main body side determines whether or not an interchangeable lens is mounted (step S100). In a case where it is determined that the interchangeable lens is mounted, in step S102, the CPU 40 acquires lens information (focal length-F-stop range) from the lens information retention unit 105 of the interchangeable lens 104.

In step S104, it is determined to which interchangeable lens the mounted interchangeable lens described with reference to FIG. 17 belongs among the lens (1) which completely supports the stereoscopic imaging, the lens (2) which supports the stereoscopic imaging and which is capable of carrying out the stereoscopic imaging, and the lens (3) which is not capable of carrying out the stereoscopic imaging on the basis of the parallax-related information (combination information of the F-stop and the focal length) with which the minimum parallax amount set in step S16 is obtained, and the lens information acquired in step S102.

When the interchangeable lens is determined as the lens (1) which completely supports the stereoscopic imaging, it transitions to step S106, and "this lens supports stereoscopic imaging" is displayed on the stereoscopic liquid crystal monitor 30. In addition, in this case, the display may not be carried out.

In addition, when the interchangeable lens is determined as the lens (2) which supports the stereoscopic imaging and which is capable of carrying out the stereoscopic imaging, it transitions to step S108, and "this lens is not capable of carrying out stereoscopic imaging at a focal length of 40 mm or less" is displayed on the stereoscopic liquid crystal monitor 30.

In addition, when the interchangeable lens is determined as the lens (3) which is not capable of carrying out the stereoscopic imaging, it transitions to step S110, and "this lens does not support stereoscopic imaging" is displayed on the stereoscopic liquid crystal monitor 30.

In a case of transitioning to steps S106 and S108, since the stereoscopic imaging is possible, stereoscopic recording is set (steps S112 and S114). On the other hand, in a case of transitioning to steps S110, since the stereoscopic imaging is impossible, setting is automatically changed from stereoscopic recording to two-dimensional recording (step S116). That is, the CPU 40 also functions as an imaging mode switching unit. In addition, when the two-dimensional recording is set, two left and right parallax images which are mainly imaged are subjected to pixel addition (a first pixel and a second pixel are added), and are recorded as one sheet of a two-dimensional image. In addition, the parallax images may be recorded as two-dimensional images with high resolution without the image addition. In addition, in the above-described method, setting is automatically changed from the stereoscopic recording to the two-dimensional recording, but there is no limitation to the setting. The setting may be changed from the stereoscopic recording to the two-dimensional recording in response to input to the manipulation unit 38 which is manually made by a user.

In addition, in a case of carrying out the stereoscopic recording, it transitions to step S20 for setting the parallax priority program diagram, but in a case of carrying out the two-dimensional recording, it transitions to step S22.

The subsequent processes are carried out in the same manner as in the first embodiment shown in FIGS. 7A to 7C.

In this manner, in the case of a lens interchangeable type, when making a bad choice for the interchangeable lens, the stereoscopic imaging may not be carried out, or the focal length usable in a stereoscopic imaging state may be restricted. However, according to the third embodiment, the lens information is acquired from the interchangeable lens which is mounted on the camera main body, it is determined to which type the interchangeable lens belongs, and notification of the determination result is made. Accordingly, when carrying out the stereoscopic imaging, it is possible to select the interchangeable lens appropriate for the stereoscopic imaging, or it is possible to use the interchangeable lens in a range of the focal length with which the stereoscopic imaging is possible. In addition, in a case of the interchangeable lens which is not capable of carrying out the stereoscopic imaging, switching to the two-dimensional imaging is automatically carried out, and thus it is possible to carry out the two-dimensional imaging with high image quality.

### [Fourth Embodiment of Stereoscopic Imaging Operation]

The third embodiment is an embodiment of a case capable of acquiring the lens information from the interchangeable lens. However, the lens information may not be automatically acquired from the interchangeable lens through communication depending on the interchangeable lens.

The fourth embodiment is an embodiment of a case where the lens information cannot be acquired from the interchangeable lens in step S102 of the third embodiment shown in FIGS. 18A to 18D.

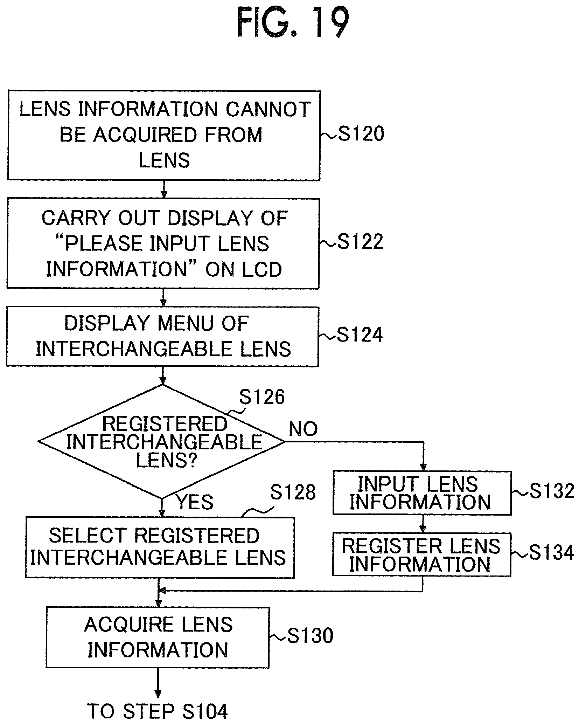

FIG 19 shows a flowchart illustrating main portions of the fourth embodiment, and shows a process in a case where the lens information cannot be acquired from the interchangeable lens in step S102 in the third embodiment shown in FIGS. 18A to 18D.

In FIG 19, when it is determined that the lens information cannot be acquired from the interchangeable lens after the interchangeable lens is mounted (step S120), the CPU 40 allows "please input lens information" to be displayed on the stereoscopic liquid crystal monitor 30" (step S122). In addition, the CPU 40 allows a menu of the interchangeable lens to be displayed (step S124).

In the menu display of the interchangeable lens, the maker's name of the interchangeable lens and a lens name which are registered in the ROM 47 of the camera main body in advance, or a lens name registered by a user in the past are displayed. In addition, it is assumed that lens information is registered in the ROM 47 in association with the lens name.

The user determines whether or not the mounted interchangeable lens is an interchangeable lens, which is registered, from the menu display of the interchangeable lens. In a case of the registered interchangeable lens, the user selects the registered interchangeable lens from the menu (steps S126 and S128). In step S128, when an appropriate interchangeable lens is selected, the user acquires the lens information which is registered in correspondence with the interchangeable lens from the ROM 47 of the camera main body (step S130).

On the other hand, in a case where the interchangeable lens mounted on the camera main body is not the registered interchangeable lens, the user directly inputs the lens information using the manipulation unit 38 (step S132). Since the lens information (focal length-open F-stop range) is written on a barrel of the interchangeable lens, the user reads out and inputs the lens information. For example, in a case where the lens information shows f=28-108 and F2.8-3.5, the user inputs the numerical values.

In addition, an operation registering a lens name, which is given, is carried out with respect to the lens information which is input in step S132 (step S134). According to the operation, in a case where the same interchangeable lens is mounted the next time, it is possible to input the lens information by selecting the registered interchangeable lens.

When the lens information is input by the user, it transitions to step S104 in the third embodiment shown in FIGS. 18A to 18D.

According to the fourth embodiment, it is also possible to cope with a case where the lens information cannot be acquired from the interchangeable lens.

In addition, in a case of manually inputting the lens information, it is difficult to input a bent line or a curved line which shows the focal length-open F-stop range shown in FIG 17. In this case, a focal length-open F-stop range which is close to two points of the input lens information is selected, or the two points are connected with a straight line and a range of this straight line is set as the focal length-open F-stop range.

### [Fifth Embodiment of Stereoscopic Imaging Operation]

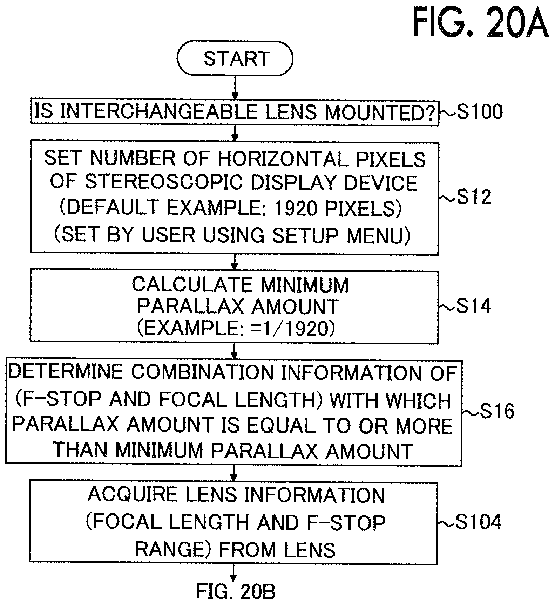

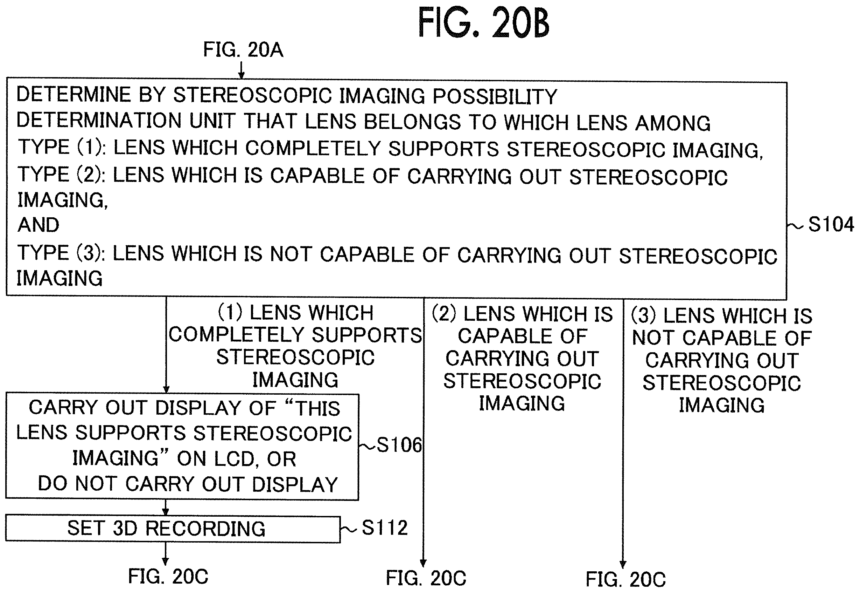

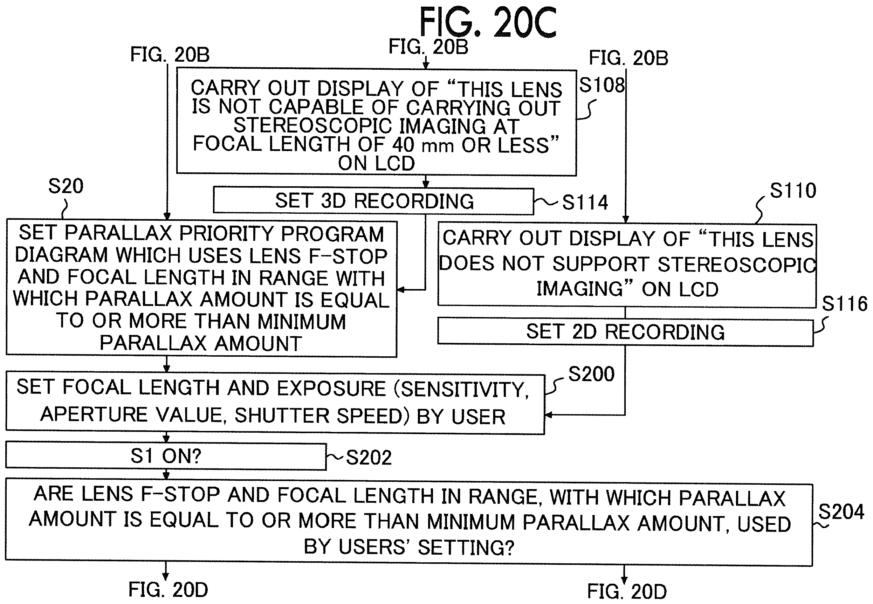

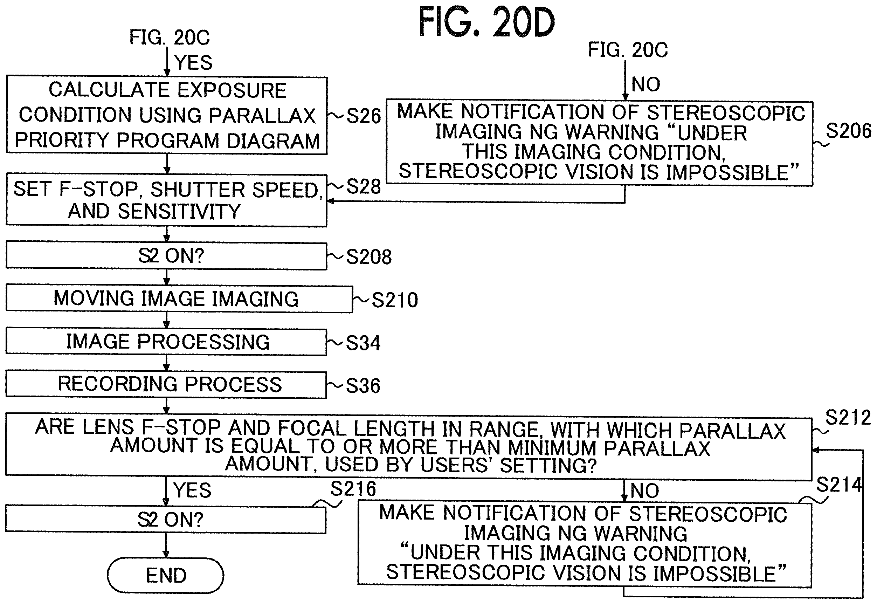

FIGS. 20A to 20D show a flowchart illustrating a fifth embodiment of the stereoscopic imaging operation of the stereoscopic imaging device according to the invention, and particularly, shows processes from recording start-up to recording termination of a stereoscopic moving image. In addition, the same step numbers are given to portions common to those of the third embodiment shown in FIGS. 18A to 18D, and a description thereof is not repeated.

In a case of imaging a stereoscopic moving image, a zooming operation of changing the focal length of the interchangeable lens during imaging of the stereoscopic moving image or changing of the F-stop may be carried out. However, in this case, it is considered that a parallax amount of left and right parallax images varies, and the parallax amount becomes less than the minimum parallax amount. Therefore, in the fifth embodiment, a user is notified of whether or not the stereoscopic imaging is carried out during imaging of the stereoscopic moving image.

In FIGS. 20A to 20D, the focal length and the exposure are set by a user (step S200). After the setting, when S1 becomes ON (Step S202), in a case of using the parallax priority program diagram set in step S20, it is determined whether or not the user's setting in step S200 uses a range with which a parallax amount is equal to or more than the minimum parallax amount (step S204).

In a case of using the range with which the parallax amount is equal to or more than the minimum parallax amount (in a case of "Yes"), on the basis of the parallax priority program diagram set in step S20 and the imaging Ev value which is calculated in advance, exposure conditions including the F-stop of the aperture 14, the shutter speed, and the imaging sensitivity are calculated (step S26), and these calculated exposure conditions are set (step S28).

On the other hand, in a case of using a range with which the parallax amount is not equal to or more than the minimum parallax amount (in a case of "No"), a notification indicating that the stereoscopic imaging cannot be carried out (for example, "under these conditions, stereoscopic vision imaging cannot be carried out") is displayed on the stereoscopic liquid crystal monitor 30 (step S206), and then it transitions to step S28. According to this notification, a user can confirm whether or not imaging conditions are stereoscopic vision imaging conditions before initiation of the moving image imaging.

After the confirmation, when S2 becomes ON (step S208), the imaging of the stereoscopic moving image is initiated (step S210), and image processing of a stereoscopic moving image and a recording process is carried out (steps S212 and S214).

In step S212, it is determined whether or not the user's setting about the focal length of the interchangeable lens uses a range with which a parallax amount is equal to or more than the minimum parallax amount during imaging and recording of the stereoscopic moving image (step S212). In a case of using a range with which the parallax amount is not equal to or more than the minimum parallax amount (in a case of "No"), a notification indicating that the stereoscopic imaging cannot be carried out (for example, "under these conditions, stereoscopic vision imaging cannot be carried out") is displayed on the stereoscopic liquid crystal monitor 30 (step S214). According to this notification, a user can confirm whether or not imaging conditions are stereoscopic vision imaging conditions in a case of changing the imaging conditions such as the focal length of the interchangeable lens during the imaging of the stereoscopic moving image.

After the confirmation, when S2 is ON again (step S216), recording of the stereoscopic moving image is stopped, and the imaging of the stereoscopic moving image is terminated.

### [Others]

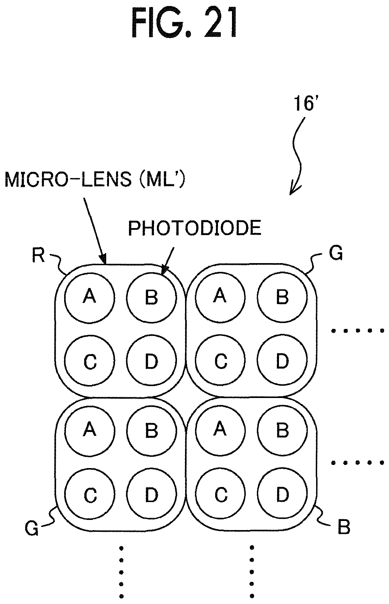

FIG. 21 shows a view illustrating another configuration example of an imaging device 16'.

In the imaging device 16', a unit, in which four photodiodes A, B, C, and D are two-dimensionally arranged, and one micro-lens ML' which covers the four photodiodes is arranged, is set as one unit (four pixels and one micro-lens), and a plurality of the units are two-dimensionally arranged. Each of the photodiodes in the unit can be read out independently.

Among pixels including R (red), G (green), and B (blue) color filters, a pixel arrangement line of GRGR ··· is provided in odd number lines (1, 3, 5, ···) of the imaging device 16' shown in FIG 21. On the other hand, with regard to pixels of even number lines (2, 4, 6, ···), a pixel arrangement line of BGBG ··· is provided.

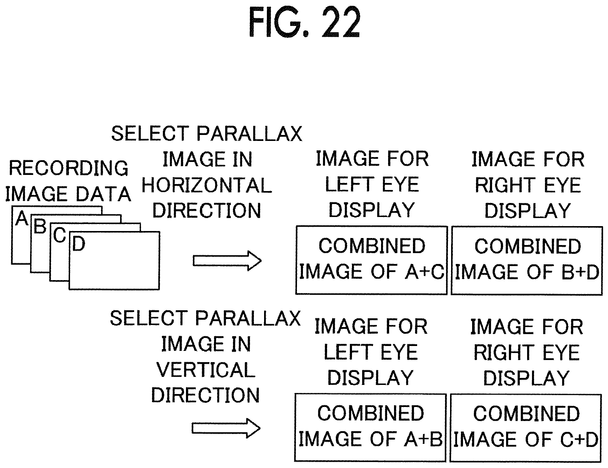

FIG. 22 shows a view illustrating a mechanism of imaging a stereoscopic image with the imaging device 16'.

In a case where the imaging device 16' is used for imaging in a horizontal direction (typical horizontal imaging), a combination of the photodiodes A and C of each unit becomes a first pixel which receives only luminous fluxes which pass through an exit pupil on a left side of an optical axis, and a combined image of the photodiodes A and C becomes a left parallax image. In addition, a combination of the photodiodes B and D of each unit becomes a second pixel which receives only luminous fluxes which pass through the exit pupil on a right side of the optical axis, and a combined image of the photodiodes B and D becomes a right parallax image.

In a case where the imaging device 16' is used for imaging in a vertical direction (so-called vertical imaging which is carried out by rotating the stereoscopic imaging device 1 by 90°), a combination of the photodiodes A and B of each unit becomes a first pixel which receives only luminous fluxes which pass through an exit pupil on a left side of the optical axis, and a combined image of the photodiodes A and B becomes a left parallax image. In addition, a combination of the photodiodes C and D of each unit becomes a second pixel which receives only luminous fluxes which pass through the exit pupil on a right side of the optical axis, and a combined image of the photodiodes C and D becomes a right parallax image.

In addition, an imaging device which is capable of simultaneously acquiring a plurality of parallax images is not limited to the embodiment, and various devices may be employed.

In addition, a typical two-dimensional liquid crystal monitor may be used instead of the stereoscopic liquid crystal monitor 30 on a camera rear surface.

Further, the invention is not limited to the above-described embodiments, and various modifications can be made in a range not departing from the scope of the invention.

### Reference Signs List

10, 100: Stereoscopic imaging device
12: Imaging lens
14: Aperture
14: Aperture
16, 16': Imaging device
16A, 16B: Light shielding member
30: Stereoscopic liquid crystal monitor
32: CCD control unit
34: Aperture drive unit
36: Lens drive unit
38: Manipulation unit
38A: Parallax amount setting unit
40: CPU
47: ROM
49: Parallax-related information retention unit
105: Lens information retention unit

## Claims

1. A stereoscopic imaging device (10), comprising:
an imaging device (16, 16') in which subject images passed through different regions of a single imaging optical system are pupil-divided and are formed, respectively, and adapted to photoelectrically convert the subject images passed through the different regions, respectively, and outputs a plurality of parallax images;
an aperture (14) adapted to restrict a luminous flux incident to the imaging device (16, 16') according to an F-stop of the aperture (14); **characterized in that**
a parallax-related information storage unit (49) adapted to store parallax-related information indicating a relationship between a combination of the F-stop of the aperture (14) and a focal length of the imaging optical system (16, 16'), and parallax amount, wherein the parallax-related information stored in the parallax-related information storage unit (49) is information indicating a combination of the F-stop of the aperture (14) and the focal length of the imaging optical system (16, 16') in which a parallax amount between subject images, when subjects are located on a near side and on a distant side in a predetermined imaging distance range of the imaging optical system (16, 16'), is in a predetermined parallax amount range;
a mode setting unit (38) adapted to set a first mode using automatic setting of exposure conditions or a second mode using manual setting of exposure conditions;
a control unit (40), adapted to control at least one of the F-stop of the aperture (14) and the focal length of the imaging optical system (16, 16') on the basis of the parallax-related information stored in the parallax-related information storage unit (49), when the first mode is set by the mode setting unit (38);
a determination unit (40), adapted to determine whether or not the combination of the F-stop of the aperture (14) and the focal length of the imaging optical system (16, 16') is in a range with which the parallax amount is equal to or more than that defined by the parallax-related information stored in the parallax-related information storage unit (49), when the second mode is set by the mode setting unit (38); and
a notification unit adapted to give a notification of a determination result of the determination unit (40);
wherein the parallax-related information storage unit (49) is adapted to store first parallax-related information having a first parallax amount corresponding to resolution of a first stereoscopic display unit, and second parallax-related information having a second parallax amount corresponding to resolution of a second stereoscopic display unit,
the determination unit (40) is adapted to determine whether or not a parallax amount in the combination of the F-stop of the aperture (14) and the focal length of the imaging optical system (16, 16') is less than the first parallax amount and whether or not the parallax amount in the combination is less than the second parallax amount on the basis of the F-stop of the aperture (14), the focal length of the imaging optical system (16, 16'), and the first parallax-related information and the second parallax-related information which are stored in the parallax-related information storage unit (49), and
the notification unit is adapted to give a notification of the determination results of the determination unit, respectively.

2. The stereoscopic imaging device according to claim 1, further comprising:
a focal length detection unit (40) adapted to detect the focal length of the imaging optical system (16, 16'), or a focal length setting unit (40) adapted to set the focal length of the imaging optical system (16, 16') according to the second mode ,
wherein the control unit (40) is adapted to acquire the focal length which is detected by the focal length detection unit (40), or the focal length which is set by the focal length setting unit (40).

3. The stereoscopic imaging device according to claim 1 or 2, further comprising:
a focal length detection unit (40) adapted to detect the focal length of the imaging optical system (16, 16'), or a focal length setting unit (40) adapted to set the focal length of the imaging optical system (16, 16') according to the second mode,
wherein the determination unit (40) is adapted to acquire the focal length which is detected by the focal length detection unit (40), or the focal length which is set by the focal length setting unit (40).

4. The stereoscopic imaging device according to claim 1 or 2, further comprising:
a photometry unit adapted to measures brightness of each of the subject images; and
a program diagram storage unit (48) adapted to store a plurality of parallax priority program diagrams which are capable of changing the parallax amount of the plurality of parallax images output from the imaging device (16, 16') and which have a constant F-stop,
wherein the control unit (40) is adapted to select one parallax priority program diagram from the plurality of parallax priority program diagrams stored in the program diagram storage unit (48),
the control unit (40) includes,
an exposure condition determination unit adapted to determine exposure conditions including the F-stop of the aperture (14) on the basis of the one parallax priority program diagram which is selected by the control unit (40) and the brightness of the subject image which is measured by the photometry unit, and
an exposure control unit adapted to carry out exposure control on the basis of the exposure conditions which are determined, wherein
the control unit (40) is adapted to determine the F-stop of the aperture (14) on the basis of the focal length of the imaging optical system (16, 16') and the parallax-related information stored in the parallax-related information storage unit (49), and to select the parallax priority program diagram within a range equal to or less than the determined F-stop.

5. The stereoscopic imaging device according to claim 4, further comprising:
a parallax intensity instruction unit (40) adapted to give an instruction for parallax intensity of the plurality of parallax images output from the imaging device by input of a user,
wherein the control unit (40) is adapted to select a parallax priority program diagram which corresponds to the parallax intensity instructed by the parallax intensity instruction unit (40) among the plurality of parallax priority program diagrams within a range equal to or less than the determined F-stop of the aperture (14).

6. The stereoscopic imaging device according to any one of claims 1 to 5,
wherein the imaging optical system (16, 16') and the aperture (14) are included in an interchangeable lens (104) which is detachable from a main body of the device.

7. The stereoscopic imaging device according to claim 6, further comprising:
a lens information acquisition unit adapted to acquire lens information including a focal length and an open F-stop from the interchangeable lens (104);
an interchangeable lens determination unit (40) adapted to determine whether or not the interchangeable lens (104) is a lens which completely supports the stereoscopic imaging and which is capable of carrying out the stereoscopic imaging in an entire focal length range, a lens which supports the stereoscopic imaging and which is capable of carrying out the stereoscopic imaging in a partial focal length range, or a lens which is not capable of carrying out the stereoscopic imaging in the entire focal length range on the basis of the acquired lens information and the parallax-related information stored in the parallax-related information storage unit; and
a lens determination result notification unit adapted to give a notification of the determination result obtained by the interchangeable lens determination unit (40).

8. The stereoscopic imaging device according to claim 7, further comprising:
a lens information input unit adapted to receive a manual input relating to lens information of the interchangeable lens (104) in a case where the lens information acquisition unit (40) is not capable of acquiring the lens information from the interchangeable lens (104) mounted on the main body of the device.

9. The stereoscopic imaging device according to claim 7 or 8, further comprising:
an imaging mode switching unit adapted to switch a stereoscopic imaging mode in which the parallax image is acquired and a two-dimensional imaging mode in which the parallax image is not acquired.

10. The stereoscopic imaging device according to claim 9,
wherein the imaging mode switching unit is adapted to carry out switching from the stereoscopic imaging mode to the two-dimensional imaging mode in a case where it is determined by the interchangeable lens determination unit (40) that the interchangeable lens (104) mounted on the main body of the device is a lens which is not capable of carrying out the stereoscopic imaging.

11. The stereoscopic imaging device according to any one of claims 1 to 10,
wherein the imaging device (16, 16') includes a first group of pixels (16A) and a second group of pixels (16B) for photoelectric conversion which are arranged on an entire surface of an exposure region of the imaging device (16, 16'), a luminous flux receiving direction of the first group of pixels (16A) being restricted so as to receive only a subject image passed through a first region of the imaging optical system (16, 16'), and a luminous flux receiving direction of the second group of pixels (16B) being restricted so as to receive only a subject image passed through a second region of the imaging optical system (16, 16'), and the stereoscopic imaging device is capable of reading out the plurality of parallax images from the first group of pixels (16A) and the second group of pixels (16B).

## Patentansprüche

1. Stereoskopische Bildgebungsvorrichtung (10), umfassend:
eine Bildgebungsvorrichtung (16, 16'), wobei Motivbilder, die durch unterschiedliche Regionen eines einzigen optischen Bildgebungssystems verlaufen, pupillengeteilt und jeweils ausgebildet werden, und die angepasst ist, die durch die unterschiedlichen Regionen verlaufenen Motivbilder fotoelektrisch umzuwandeln, und eine Vielzahl von Parallaxenbildern ausgibt;
eine Blende (14), die angepasst ist, einen in die Bildgebungsvorrichtung (16, 16') einfallenden Lichtfluss gemäß einer Blendenzahl der Blende (14) einzuschränken;
**dadurch gekennzeichnet, dass**
eine Speicherungseinheit für parallaxenbezogene Informationen (49) angepasst ist, parallaxenbezogene Informationen zu speichern, die eine Beziehung zwischen einer Kombination der Blendenzahl der Blende (14) und einer Brennweite des optischen Bildgebungssystems (16, 16') und der Parallaxenmenge angeben, wobei es sich bei den auf der Speicherungseinheit für parallaxenbezogene Informationen (49) gespeicherten parallaxenbezogenen Informationen um Informationen handelt, die eine Kombination der Blendenzahl der Blende (14) und der Brennweite des optischen Bildgebungssystems (16, 16') angeben, wobei eine Parallaxenmenge zwischen Motivbildern, wenn sich Motive auf einer näher gelegenen Seite und auf einer entfernten Seite in einem vorbestimmten Bildgebungsdistanzbereich des optischen Bildgebungssystems (16, 16') befinden, in einem vorbestimmten Parallaxenmengenbereich liegt;
eine Moduseinstellungseinheit (38), die angepasst ist, einen ersten Modus unter Verwendung automatischer Einstellung von Belichtungsbedingungen oder einen zweiten Modus unter Verwendung manueller Einstellung von Belichtungsbedingungen einzustellen;
eine Steuereinheit (40), die angepasst ist, zumindest eines von der Blendenzahl der Blende (14) und der Brennweite des optischen Bildgebungssystems (16, 16') auf Basis der auf der Speicherungseinheit für parallaxenbezogene Informationen (49) gespeicherten parallaxenbezogenen Informationen zu steuern, wenn der erste Modus durch die Moduseinstellungseinheit (38) eingestellt ist;
eine Bestimmungseinheit (40), die angepasst ist, zu bestimmen, ob die Kombination der Blendenzahl der Blende (14) und der Brennweite des optischen Bildgebungssystems (16, 16') in einem Bereich liegt, mit dem die Parallaxenmenge größer oder gleich jener ist, die durch die auf der Speicherungseinheit für parallaxenbezogene Informationen (49) gespeicherten parallaxenbezogenen Informationen definiert ist, oder nicht, wenn der zweite Modus durch die Moduseinstellungseinheit (38) eingestellt ist; und
eine Benachrichtigungseinheit, die angepasst ist, eine Benachrichtigung über ein Bestimmungsergebnis der Bestimmungseinheit (40) abzugeben;
wobei die Speicherungseinheit für parallaxenbezogene Informationen (49) angepasst ist, erste parallaxenbezogene Informationen zu speichern, die eine erste Parallaxenmenge, die der Auflösung einer ersten stereoskopischen Anzeigeeinheit entspricht, aufweisen, und zweite parallaxenbezogene Informationen, die eine zweite Parallaxenmenge, die der Auflösung einer zweiten stereoskopischen Anzeigeeinheit entspricht, aufweisen,
die Bestimmungseinheit (40) angepasst ist, auf Basis der Blendenzahl der Blende (14), der Brennweite des optischen Bildgebungssystems (16, 16') und der ersten parallaxenbezogenen Informationen und der zweiten parallaxenbezogenen Informationen, die auf der Speicherungseinheit für parallaxenbezogene Informationen (49) gespeichert sind, zu bestimmen, ob eine Parallaxenmenge in der Kombination der Blendenzahl der Blende (14) und der Brennweite des optischen Bildgebungssystems (16, 16') geringer ist als die erste Parallaxenmenge oder nicht und ob die Parallaxenmenge in der Kombination geringer ist als die zweite Parallaxenmenge oder nicht, und
die Benachrichtigungseinheit angepasst ist, jeweils eine Benachrichtigung über die Bestimmungsergebnisse der Bestimmungseinheit abzugeben.

2. Stereoskopische Bildgebungsvorrichtung nach Anspruch 1, weiter umfassend:
eine Brennweitendetektionseinheit (40), die angepasst ist, die Brennweite des optischen Bildgebungssystems (16, 16') zu detektieren, oder eine Brennweiteneinstellungseinheit (40), die angepasst ist, die Brennweite des optischen Bildgebungssystems (16, 16') gemäß dem zweiten Modus einzustellen,
wobei die Steuereinheit (40) angepasst ist, die Brennweite, die durch die Brennweitendetektionseinheit (40) detektiert wurde, oder die Brennweite, die durch die Brennweiteneinstellungseinheit (40) eingestellt wurde, zu erhalten.

3. Stereoskopische Bildgebungsvorrichtung nach Anspruch 1 oder 2, weiter umfassend:
eine Brennweitendetektionseinheit (40), die angepasst ist, die Brennweite des optischen Bildgebungssystems (16, 16') zu detektieren, oder eine Brennweiteneinstellungseinheit (40), die angepasst ist, die Brennweite des optischen Bildgebungssystems (16,16') gemäß dem zweiten Modus einzustellen,
wobei die Bestimmungseinheit (40) angepasst ist, die Brennweite, die durch die Brennweitendetektionseinheit (40) detektiert wurde, oder die Brennweite, die durch die Brennweiteneinstellungseinheit (40) eingestellt wurde, zu erhalten.

4. Stereoskopische Bildgebungsvorrichtung nach Anspruch 1 oder 2, weiter umfassend:
eine Fotometrieeinheit, die angepasst ist, die Helligkeit jedes der Motivbilder zu messen; und
eine Programmdiagrammspeicherungseinheit (48), die angepasst ist, eine Vielzahl von Parallaxenprioritätsprogrammdiagrammen zu speichern, die in der Lage sind, die Parallaxenmenge der Vielzahl von aus der Bildgebungsvorrichtung (16, 16') ausgegebenen Parallaxenbilder zu ändern, und die eine konstante Blendenzahl besitzen,
wobei die Steuereinheit (40) angepasst ist, ein Parallaxenprioritätsprogrammdiagramm aus der Vielzahl von auf der Programmdiagrammspeicherungseinheit (48) gespeicherten Parallaxenprioritätsprogrammdiagrammen auszuwählen,
wobei die Steuereinheit (40) Folgendes aufweist:
eine Belichtungsbedingungsbestimmungseinheit, die angepasst ist, Belichtungsbedingungen einschließlich der Blendenzahl der Blende (14) auf Basis des einen Parallaxenprioritätsprogrammdiagramms, das durch die Steuereinheit (40) ausgewählt wurde, und der Helligkeit des Motivbilds, die durch die Fotometrieeinheit gemessen wurde, zu bestimmen, und
eine Belichtungssteuereinheit, die angepasst ist, Belichtungssteuerung auf Basis der Belichtungsbedingungen, die bestimmt wurden, auszuführen, wobei
die Steuereinheit (40) angepasst ist, die Blendenzahl der Blende (14) auf Basis der Brennweite des optischen Bildgebungssystems (16, 16') und der auf der Speicherungseinheit für parallaxenbezogene Informationen (49) gespeicherten parallaxenbezogenen Informationen zu bestimmen und das Parallaxenprioritätsprogrammdiagramm innerhalb eines Bereichs auszuwählen, der kleiner oder gleich der bestimmten Blendenzahl ist.

5. Stereoskopische Bildgebungsvorrichtung nach Anspruch 4, weiter umfassend:
Parallaxenintensitätsbefehlseinheit (40), die angepasst ist, einen Befehl betreffend die Parallaxenintensität der Vielzahl von durch Eingabe eines Anwenders aus der Bildgebungsvorrichtung ausgegebenen Parallaxenbildern abzugeben,
wobei die Steuereinheit (40) angepasst ist, unter der Vielzahl von Parallaxenprioritätsprogrammdiagrammen innerhalb eines Bereichs, der kleiner oder gleich der bestimmten Blendenzahl der Blende (14) ist, ein Parallaxenprioritätsprogrammdiagramm auszuwählen, das der durch die Parallaxenintensitätsbefehlseinheit (40) befohlenen Parallaxenintensität entspricht.

6. Stereoskopische Bildgebungsvorrichtung nach einem der Ansprüche 1 bis 5,
wobei das optische Bildgebungssystem (16, 16') und die Blende (14) in ein Wechselobjektiv (104) integriert sind, das sich von einem Hauptkörper der Vorrichtung abnehmen lässt.

7. Stereoskopische Bildgebungsvorrichtung nach Anspruch 6, weiter umfassend:
eine Objektivinformationserhaltungseinheit, die angepasst ist, von dem Wechselobjektiv (104) Objektivinformationen einschließlich einer Brennweite und einer offenen Blendenzahl zu erhalten;
eine Wechselobjektivbestimmungseinheit (40), die angepasst ist, auf Basis der erhaltenen Objektivinformationen und der auf der Speicherungseinheit für parallaxenbezogene Informationen gespeicherten parallaxenbezogenen Informationen zu bestimmen, ob das Wechselobjektiv (104) ein Objektiv, das die stereoskopische Bildgebung zur Gänze unterstützt und das in einem gesamten Brennweitenbereich in der Lage ist, die stereoskopische Bildgebung auszuführen, ein Objektiv, das die stereoskopische Bildgebung unterstützt und das in einem Teil des Brennweitenbereichs in der Lage ist, die stereoskopische Bildgebung auszuführen, oder ein Objektiv ist, das in einem gesamten Brennweitenbereich nicht in der Lage ist, die stereoskopische Bildgebung auszuführen; und
eine Objektivbestimmungsergebnis-Benachrichtigungseinheit, die angepasst ist, eine Benachrichtigung über die Bestimmungsergebnisse abzugeben, die von der Wechselobjektivbestimmungseinheit (40) erhalten wurden.

8. Stereoskopische Bildgebungsvorrichtung nach Anspruch 7, weiter umfassend:
eine Objektivinformationseingabeeinheit, die angepasst ist, eine manuelle Eingabe bezüglich Objektivinformationen des Wechselobjektivs (104) in einem Fall zu empfangen, in dem die Objektivinformationserhaltungseinheit (40) nicht in der Lage ist, die Objektivinformationen aus dem Wechselobjektiv (104) zu erhalten, das an dem Hauptkörper der Vorrichtung angebracht ist.

9. Stereoskopische Bildgebungsvorrichtung nach Anspruch 7 oder 8, weiter umfassend:
eine Bildgebungsmodus-Schalteinheit, die angepasst ist, zwischen einem stereoskopischen Bildgebungsmodus, in dem das Parallaxenbild erhalten wird, und einem zweidimensionalen Bildgebungsmodus, in dem das Parallaxenbild nicht erhalten wird, zu schalten.

10. Stereoskopische Bildgebungsvorrichtung nach Anspruch 9,
wobei die Bildgebungsmodus-Schalteinheit angepasst ist, ein Schalten von dem stereoskopischen Bildgebungsmodus zu dem zweidimensionalen Bildgebungsmodus in einem Fall auszuführen, in dem durch die Wechselobjektivbestimmungseinheit (40) bestimmt wird, dass das Wechselobjektiv (104), das an dem Hauptkörper der Vorrichtung angebracht ist, ein Objektiv ist, das nicht in der Lage ist, die stereoskopische Bildgebung auszuführen.

11. Stereoskopische Bildgebungsvorrichtung nach einem der Ansprüche 1 bis 10,
wobei die Bildgebungsvorrichtung (16, 16') eine erste Gruppe von Pixeln (16A) und eine zweite Gruppe von Pixeln (16B) zur fotoelektrischen Umwandlung aufweist, die auf einer gesamten Oberfläche einer Belichtungsregion der Bildgebungsvorrichtung (16, 16') angeordnet sind, wobei eine Lichtflussempfangsrichtung der ersten Gruppe von Pixeln (16A) so eingeschränkt ist, dass sie nur ein Motivbild empfängt, das durch eine erste Region des optischen Bildgebungssystems (16, 16') verläuft, und eine Lichtflussempfangsrichtung der zweiten Gruppe von Pixeln (16B) so eingeschränkt ist, dass sie nur ein Motivbild empfängt, das durch eine zweite Region des optischen Bildgebungssystems (16, 16') verläuft, und die stereoskopische Bildgebungsvorrichtung in der Lage ist, die Vielzahl von Parallaxenbildern aus der ersten Gruppe von Pixeln (16A) und der zweiten Gruppe von Pixeln (16B) auszulesen.

## Revendications

1. Dispositif d'imagerie stéréoscopique (10), comprenant :
un dispositif d'imagerie (16, 16') dans lequel des images de sujet passées à travers différentes régions d'un unique système optique d'imagerie sont soumises à une division pupillaire et sont formées, respectivement, et adapté pour convertir par voie photoélectrique les images de sujets passées à travers les différentes régions, respectivement, et qui délivre en sortie une pluralité d'images de parallaxe ;
une ouverture (14) adaptée pour limiter un flux lumineux incident sur le dispositif d'imagerie (16, 16') selon le F-stop de l'ouverture (14) ;
**caractérisé en ce que**
une unité de stockage d'informations relatives à la parallaxe (49) adaptée pour stocker des informations relatives à la parallaxe indiquant une relation entre une combinaison du F-stop de l'ouverture (14) et d'une distance focale du système optique d'imagerie (16, 16'), et une quantité de parallaxe, dans lequel les informations relatives à la parallaxe stockées dans l'unité de stockage d'informations relatives à la parallaxe (49) sont des informations indiquant une combinaison du F-stop de l'ouverture (14) et de la distance focale du système optique d'imagerie (16, 16') dans laquelle une quantité de parallaxe entre des images de sujet, lorsque des sujets sont situés sur un côté proche et sur un côté distant dans une plage de distance d'imagerie prédéterminée du système optique d'imagerie (16, 16'), est dans une plage de quantité de parallaxe prédéterminée;
une unité de réglage de mode (38) adaptée pour régler un premier mode en utilisant un réglage automatique de conditions d'exposition ou un second mode en utilisant un réglage manuel de conditions d'exposition ;
une unité de commande (40), adaptée pour commander au moins l'un du F-stop de l'ouverture (14) et de la distance focale du système optique d'imagerie (16, 16') sur la base des informations relatives à la parallaxe stockées dans l'unité de stockage d'informations relatives à la parallaxe (49), lorsque le premier mode est réglé par l'unité de réglage de mode (38) ;
une unité de détermination (40), adaptée pour déterminer si la combinaison du F-stop de l'ouverture (14) et de la distance focale du système optique d'imagerie (16, 16') est ou non dans une plage avec laquelle la quantité de parallaxe est égale ou supérieure à celle définie par les informations relatives à la parallaxe stockées dans l'unité de stockage d'informations relatives à la parallaxe (49), lorsque le second mode est réglé par l'unité de réglage de mode (38) ; et
une unité de notification adaptée pour donner une notification d'un résultat de détermination de l'unité de détermination (40) ;
dans lequel l'unité de stockage d'informations relatives à la parallaxe (49) est adaptée pour stocker des premières informations relatives à la parallaxe ayant une première quantité de parallaxe correspondant à la résolution d'une première unité d'affichage stéréoscopique, et des secondes informations relatives à la parallaxe ayant une seconde quantité de parallaxe correspondant à la résolution d'une seconde unité d'affichage stéréoscopique,
l'unité de détermination (40) est adaptée pour déterminer si une quantité de parallaxe dans la combinaison du F-stop de l'ouverture (14) et de la distance focale du système optique d'imagerie (16, 16') est inférieure ou non à la première quantité de parallaxe et si la quantité de parallaxe dans la combinaison est inférieure ou non à la seconde quantité de parallaxe sur la base du F-stop de l'ouverture (14), de la distance focale du système optique d'imagerie (16, 16'), et des premières informations relatives à la parallaxe et des secondes informations relatives à la parallaxe qui sont stockées dans l'unité de stockage d'informations relatives à la parallaxe (49), et
l'unité de notification est adaptée pour donner une notification des résultats de détermination de l'unité de détermination, respectivement.

2. Dispositif d'imagerie stéréoscopique selon la revendication 1, comprenant en outre :
une unité de détection de distance focale (40) adaptée pour détecter la distance focale du système optique d'imagerie (16, 16'), ou une unité de réglage de distance focale (40) adaptée pour régler la distance focale du système optique d'imagerie (16, 16') selon le second mode,
dans lequel l'unité de commande (40) est adaptée pour acquérir la distance focale qui est détectée par l'unité de détection de distance focale (40), ou la distance focale qui est réglée par l'unité de réglage de distance focale (40).

3. Dispositif d'imagerie stéréoscopique selon la revendication 1 ou 2, comprenant en outre :
une unité de détection de distance focale (40) adaptée pour détecter la distance focale du système optique d'imagerie (16, 16'), ou une unité de réglage de distance focale (40) adaptée pour régler la distance focale du système optique d'imagerie (16, 16') selon le second mode,
dans lequel l'unité de détermination (40) est adaptée pour acquérir la distance focale qui est détectée par l'unité de détection de distance focale (40), ou la distance focale qui est réglée par l'unité de réglage de distance focale (40).

4. Dispositif d'imagerie stéréoscopique selon la revendication 1 ou 2, comprenant en outre :
une unité de photométrie adaptée pour mesurer la luminosité de chacune des images de sujet; et
une unité de stockage de diagrammes de programme (48) adaptée pour stocker une pluralité de diagrammes de programme de priorité de parallaxe qui sont capables de modifier la quantité de parallaxe de la pluralité d'images de parallaxe délivrées en sortie par le dispositif d'imagerie (16, 16') et qui ont un F-stop constant,
dans lequel l'unité de commande (40) est adaptée pour choisir un diagramme de programme de priorité de parallaxe parmi la pluralité de diagrammes de programme de priorité de parallaxe stockés dans l'unité de stockage de diagrammes de programme (48),
l'unité de commande (40) inclut,
une unité de détermination de conditions d'exposition adaptée pour déterminer des conditions d'exposition incluant le F-stop de l'ouverture (14) sur la base du diagramme de programme de priorité de parallaxe qui est choisi par l'unité de commande (40) et de la luminosité de l'image de sujet qui est mesurée par l'unité de photométrie, et
une unité de commande d'exposition adaptée pour effectuer une commande d'exposition sur la base des conditions d'exposition qui sont déterminées, dans lequel
l'unité de commande (40) est adaptée pour déterminer le F-stop de l'ouverture (14) sur la base de la distance focale du système optique d'imagerie (16, 16') et des informations relatives à la parallaxe stockées dans l'unité de stockage d'informations relatives à la parallaxe (49), et pour choisir le diagramme de programme de priorité de parallaxe dans une plage égale ou inférieure au F-stop déterminé.

5. Dispositif d'imagerie stéréoscopique selon la revendication 4, comprenant en outre :
une unité d'indication d'intensité de parallaxe (40) adaptée pour donner une indication d'intensité de parallaxe de la pluralité d'images de parallaxe délivrées en sortie par le dispositif d'imagerie par entrée d'un utilisateur,
dans lequel l'unité de commande (40) est adaptée pour choisir un diagramme de programme de priorité de parallaxe qui correspond à l'intensité de parallaxe indiquée par l'unité d'indication d'intensité de parallaxe (40) parmi la pluralité de diagrammes de programme de priorité de parallaxe dans une plage égale ou inférieure au F-stop déterminé de l'ouverture (14).

6. Dispositif d'imagerie stéréoscopique selon l'une quelconque des revendications 1 à 5,
dans lequel le système optique d'imagerie (16, 16') et l'ouverture (14) sont inclus dans une lentille interchangeable (104) qui est séparable d'un corps principal du dispositif.

7. Dispositif d'imagerie stéréoscopique selon la revendication 6, comprenant en outre :
une unité d'acquisition d'informations de lentille adaptée pour acquérir des informations de lentille incluant une distance focale et un F-stop ouvert de la lentille interchangeable (104) ;
une unité de détermination de lentille interchangeable (40) adaptée pour déterminer si la lentille interchangeable (104) est ou non une lentille qui prend complètement en charge l'imagerie stéréoscopique et qui est capable d'effectuer l'imagerie stéréoscopique dans une plage entière de distance focale, une lentille qui prend en charge l'imagerie stéréoscopique et qui est capable d'effectuer l'imagerie stéréoscopique dans une plage partielle de distance focale, ou une lentille qui n'est pas capable d'effectuer l'imagerie stéréoscopique dans la plage entière de distance focale sur la base des informations de lentille acquises et des informations relatives à la parallaxe stockées dans l'unité de stockage d'informations relatives à la parallaxe; et
une unité de notification de résultat de détermination de lentille adaptée pour donner une notification du résultat de détermination obtenu par l'unité de détermination de lentille interchangeable (40).

8. Dispositif d'imagerie stéréoscopique selon la revendication 7, comprenant en outre :
une unité d'entrée d'informations de lentille adaptée pour recevoir une entrée manuelle relative à des informations de lentille de la lentille interchangeable (104) dans un cas où l'unité d'acquisition d'informations de lentille (40) n'est pas capable d'acquérir les informations de lentille de la lentille interchangeable (104) montée sur le corps principal du dispositif.

9. Dispositif d'imagerie stéréoscopique selon la revendication 7 ou 8, comprenant en outre :
une unité de commutation de mode d'imagerie adaptée pour commuter un mode d'imagerie stéréoscopique dans lequel l'image de parallaxe est acquise et un mode d'imagerie bidimensionnelle dans lequel l'image de parallaxe n'est pas acquise.

10. Dispositif d'imagerie stéréoscopique selon la revendication 9,
dans lequel l'unité de commutation de mode d'imagerie est adaptée pour effectuer une commutation du mode d'imagerie stéréoscopique vers le mode d'imagerie bidimensionnelle dans un cas où il est déterminé par l'unité de détermination de lentille interchangeable (40) que la lentille interchangeable (104) montée sur le corps principal du dispositif est une lentille qui n'est pas capable d'effectuer l'imagerie stéréoscopique.

11. Dispositif d'imagerie stéréoscopique selon l'une quelconque des revendications 1 à 10,
dans lequel le dispositif d'imagerie (16, 16') inclut un premier groupe de pixels (16A) et un second groupe de pixels (16B) pour une conversion photoélectrique qui sont agencés sur une surface entière d'une région d'exposition du dispositif d'imagerie (16, 16'), une direction de réception de flux lumineux du premier groupe de pixels (16A) étant limitée de manière à recevoir seulement une image de sujet passée à travers une première région du système optique d'imagerie (16, 16'), et une direction de réception de flux lumineux du second groupe de pixels (16B) étant limitée de manière à recevoir seulement une image de sujet passée à travers une seconde région du système optique d'imagerie (16, 16'), et le dispositif d'imagerie stéréoscopique est capable de lire la pluralité d'images de parallaxe à partir du premier groupe de pixels (16A) et du second groupe de pixels (16B).
